(19)

**Europäisches Patentamt**
**European Patent Office**
**Office européen des brevets**

(11) **EP 4 177 639 A1**

(12) **EUROPEAN PATENT APPLICATION**

(43) Date of publication:
**10.05.2023 Bulletin 2023/19**

(21) Application number: **22210146.1**

(22) Date of filing: **08.11.2017**

(51) International Patent Classification (IPC):
*G01S 17/42* (2006.01)     *B25J 11/00* (2006.01)
*B25J 9/16* (2006.01)     *B25J 19/02* (2006.01)
*A47L 9/28* (2006.01)     *G01S 17/93* (2020.01)
*G01S 17/89* (2020.01)     *G01S 7/481* (2006.01)
*G01S 17/04* (2020.01)     *A47L 9/00* (2006.01)
*G01S 17/87* (2020.01)     *G01S 17/88* (2006.01)
*G01S 17/931* (2020.01)     *G05D 1/02* (2020.01)

(52) Cooperative Patent Classification (CPC):
**G01S 17/89; A47L 9/2805; A47L 9/2826;**
**A47L 9/2847; A47L 9/2852; B25J 9/16;**
**B25J 11/00; B25J 19/02; G01S 7/481; G01S 17/04;**
**G01S 17/42; G01S 17/87; G01S 17/88;**
**G01S 17/93; G01S 17/931;**     (Cont.)

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **30.11.2016 KR 20160161693**
**06.12.2016 KR 20160165081**
**21.08.2017 KR 20170105715**

(62) Document number(s) of the earlier application(s) in accordance with Art. 76 EPC:
**17876999.8 / 3 549 726**

(71) Applicant: **Yujin Robot Co., Ltd.**
**Incheon, 22013 (KR)**

(72) Inventors:
• **SHIN, Kyung Chul**
**03010 Seoul (KR)**

• **PARK, Seong Ju**
**15820 Gunpo-si Gyeonggi-do (KR)**
• **KWON, Ji Wook**
**21017 Gyeyang-gu Incheon (KR)**
• **LEE, Jae Young**
**15804 Gunpo-si Gyeonggi-do (KR)**

(74) Representative: **Turri, Elisa et al**
**De Simone & Partners S.r.l.**
**Via Vincenzo Bellini, 20**
**00198 Roma (IT)**

Remarks:
•This application was filed on 29-11-2022 as a divisional application to the application mentioned under INID code 62.
•Claims filed after the date of receipt of the divisional application (Rule 68(4) EPC).

(54) **ROBOTIC VACUUM CLEANER WITH MULTICHANNEL LIDAR-BASED OBSTACLE DETECTION AND SLIP DETECTION**

(57)     The present invention proposes a cleaning function control device and method which obtains information on each point of an indoor space as three-dimensional information to determine a state of the floor and controls a cleaning function of the indoor space based on the state of the floor and a cleaning robot including the same. Further, the present invention proposes a multi-channel LiDAR based obstacle detecting device which obtains a surrounding environment using a multi-channel LiDAR as three-dimensional space information and distinguishes a wall, an obstacle, and a vertical environment from the three-dimensional environment information and operates a collision path avoidance algorithm which increases the efficiency of the cleaning robot while avoiding the collision based on the measured obstacle information and a cleaning robot including the same.

EP 4 177 639 A1

[FIG. 7]

310    320

B

A  Slip direction

(52) Cooperative Patent Classification (CPC): (Cont.)
**G05D 1/024; G05D 1/0274;** A47L 2201/04;
A47L 2201/06; G05D 2201/0203

**Description**

**[Technical Field]**

The present invention relates to a cleaning robot including a device which controls a cleaning function, and more particularly, to a cleaning robot which performs a cleaning function using a device which determines a state of a floor to control the cleaning function.

**[Background Art]**

A cleaning robot perceives surrounding environments using various sensors such as a vision sensor, an infrared sensor, and a ultrasonic sensor and performs a cleaning function while moving without collision with an obstacle.
However, even though the information obtained by the sensors are combined the cleaning robot only distinguishes a material of the floor such as a carpet or detects a wall, but cannot distinguish an undulation of the floor such as a ramp or detect an obstacle having a low height such as clothes, animal excrements, and door sills.

**[Summary of The Invention]**

The present invention has been made to solve the above-mentioned problems and an object of the present invention is to propose a cleaning function control device which determines a state of a floor by obtaining information at every point in the room as three-dimensional information and controls a cleaning function of the room based on the state of the floor and a cleaning robot including the same.
Further, another object of the present invention is to propose a multi-channel LiDAR based obstacle detecting device which obtains a surrounding environment using a multi-channel LiDAR as three-dimensional space information and distinguishes a wall, an obstacle (including a low obstacle), and a vertical environment from the three-dimensional environment information and operates a collision path avoiding algorithm which increases the efficiency of the cleaning robot while avoiding the collision based on the measured obstacle information and a cleaning robot including the same.
However, an object of the present invention is not limited to the above description and other objects which have not been mentioned above will be more apparent to those skilled in the art from a reading of the following description.
The present invention is contrived to achieve the above-described objects and proposes a cleaning function control device including: an indoor information obtaining unit which obtains information on each point of an indoor space as three-dimensional information, a floor state determining unit which determines a state of the floor based on information on the first points related to the floor of the indoor space, and a cleaning function control unit which controls a cleaning function of the indoor space based on the state of the floor.
Desirably, the indoor information obtaining unit uses at least one of a LiDAR sensor, a time of flight (TOF) sensor, and a rotatable laser range finder to obtain information on each point in the indoor space as three-dimensional information.
Desirably, the floor state determining unit collects the information on the first points to generate information related to an undulation change of the floor and determines the state of the floor based on the information related to the undulation change of the floor.
Desirably, the floor state determining unit determines the state of the floor as any one of a door sill, a ramp, and a cliff based on the information related to the undulation change of the floor.
Desirably, the cleaning function control device may further include: a floor material determining unit which determines a material of the floor based on the information on the first points and the cleaning function control unit controls a cleaning function for the indoor space based on the state of the floor and the material of the floor.
Desirably, the cleaning function control device may further include: an obstacle detecting unit which detects an obstacle located indoor based on the information on the first points and/or second points related to the indoor space and the cleaning function control unit controls a cleaning function for the indoor space based on the state of the floor and information on the obstacle.
Desirably, the indoor information obtaining unit obtains information on the first points using at least one channel signal related to a low beam and obtains information on the second points using at least one channel signal related to a high beam.
Desirably, the cleaning function control device may further include: a slip determining unit which determines whether a device which performs the cleaning function slips based on distances to the obstacles obtained at different points and the cleaning function control unit controls a cleaning function for the indoor space based on the state of the floor and whether the device which performs the cleaning function slips.
Desirably, the slip determining unit estimates an arrangement pattern of the obstacle based on distances to the obstacle from a third point which is any one of different points, estimates an arrangement pattern of the obstacle based on distances to an obstacle from a fourth point which is another one of different points, and matches the arrangement pattern of the obstacle estimated at the third point with the arrangement pattern of the obstacle estimated at the fourth point to determine whether the device which performs a cleaning function slips.

Desirably, when the arrangement pattern of the obstacle estimated at the third point and the arrangement pattern of the obstacle estimated at the fourth point match, the slip determining unit uses particles located within a predetermined range with respect to the third point or the fourth point.

Desirably, the slip determining unit determines whether a device which performs the cleaning operation slips based on information of particles which contribute to match the arrangement pattern of the obstacle estimated at the third point and the arrangement pattern of the obstacle estimated at the fourth point.

Desirably, the cleaning function control device may further include a foreign matter inflow amount detecting unit which detects an inflow amount of a foreign matter using a flow sensor attached to an inlet of the device which performs the cleaning function the cleaning function control unit controls the cleaning function for the indoor space based on the state of the floor and the inflow amount of the foreign matter.

Desirably, the cleaning function control device may further include a backward movement performing unit which performs a backward movement using a rotatable sensor and the cleaning function control unit controls the cleaning function of the indoor space based on the state of the floor and the backward movement.

Desirably, the indoor information obtaining unit includes a multi-channel LiDAR unit which includes at least two laser modules having different emission angles of a transmission signal to detect three-dimensional environment information including obstacle information of the cleaning robot; and a projective map generating unit which generates three-dimensional environment information for three-dimensionally defining an obstacle based on reception information of at least two laser modules and generates a projective map including three-dimensional environment information in a two-dimensional space map.

Desirably, the multi-channel LiDAR unit is located in a front upper portion of the movement direction of the cleaning robot and at least two laser modules are mounted to have different emission angles of a transmission signal in a downward horizontal direction.

Desirably, the projective map generating unit generates shape information of an obstacle including a door sill, a ramp, and a cliff by analyzing a reception signal of the multi-channel LiDAR unit.

Desirably, the projective map generating unit includes a three-dimensional environment information generating unit which represents the three-dimensional environment information using a regular hexahedron of $n^3$, and determines a marking grid position and a grid marking value using horizontal position information and vertical position information of an obstacle obtained by the multi-channel LiDAR unit.

Desirably, the projective map generating unit performs Hough transform on a binary projective map obtained by changing a projective map including height information into binary information of 1 or 0 to extract a linear area.

Desirably, the projective map generating unit assigns a higher priority to an area which is not cleaned by comparing with a cleaning map and assigns a higher priority to a straight line which is close.

Desirably, the cleaning function control device further includes: a coverage path generating unit which determines a position of the obstacle on the space based on the projective map and generate a coverage path to avoid the obstacle.

Desirably, the coverage path generating unit estimates the presence of the obstacle based on a vertical distance from each laser module to the floor and a downward horizontal emission angle of the transmission signal of the laser modules.

Desirably, when the position of the obstacle on the space is determined, the coverage path generating unit also determines a size and a shape of the obstacle and generates a coverage path to access the obstacle at a shortest distance without colliding with the obstacle to avoid the obstacle.

Further, the present invention proposes a cleaning function control method including: an indoor information obtaining step of obtaining information on each point of an indoor space as three-dimensional information; a floor state determining step of determining a state of the floor based on information on the first points related to the floor of the indoor space; and a cleaning function control step of controlling a cleaning function of the indoor space based on the state of the floor.

Desirably, between the floor state determining step and the cleaning function control step, the cleaning function control method may further include: a floor material determining step of determining a material of the floor based on the information on the first points and in the cleaning function control step, the cleaning function for the indoor space is controlled based on the state of the floor and the material of the floor.

Desirably, between the floor state determining step and the cleaning function control step, the cleaning function control method may further include: an obstacle detecting step of detecting detects an obstacle located indoor based on the information on the first points and/or second points related to the indoor space and in the cleaning function control step, the cleaning function for the indoor space is controlled based on the state of the floor and the information on the obstacle.

Desirably, between the floor state determining step and the cleaning function control step, the cleaning function control method may further include: a slip determining step of determining whether a device which performs the cleaning function slips based on distances to the obstacles obtained at different points and in the cleaning function control step, the cleaning function for the indoor space is controlled based on the state of the floor and whether a device which performs the cleaning function slips.

Desirably, between the floor state determining step and the cleaning function control step, the cleaning function control method may further include: a foreign matter inflow amount detecting step of detecting an inflow amount of a foreign matter using a flow sensor attached to an inlet of the device which performs the cleaning function and in the cleaning function control step, the cleaning function for the indoor space is controlled based on the state of the floor and the inflow amount of a foreign matter.

Desirably, between the floor state determining step and the cleaning function control step, the cleaning function control method may further include: a backward movement performing step of performing a backward movement using a rotatable sensor and in the cleaning function control step, the cleaning function for the indoor space is controlled based on the state of the floor and the backward movement.

Desirably, the indoor information obtaining step includes: a step of detecting three-dimensional environment information including obstacle information of the cleaning robot using at least two laser modules having different emission angles of a transmission signal and a projective map generating step of generating three-dimensional environment information for three-dimensionally defining an obstacle based on reception information of at least two laser modules and generating a projective map including three-dimensional environment information in a two-dimensional space map.

Desirably, between the floor state determining step and the cleaning function control step, the cleaning function control method may further include: a coverage path generating unit step of determining a position of the obstacle on the space based on the projective map and generating a coverage path to avoid the obstacle.

Further, the present invention proposes an obstacle detecting device of a multi-channel LiDAR based cleaning robot including: a multi-channel LiDAR unit which includes at least two laser modules having different emission angles of a transmission signal to detect three-dimensional environment information including obstacle information of the cleaning robot; a projective map generating unit which generates three-dimensional environment information for three-dimensionally defining an obstacle based on reception information of at least two laser modules and generates a projective map including three-dimensional environment information in a two-dimensional space map, and a coverage path generating unit which determines a position of the obstacle on the space based on the projective map and generate a coverage path to avoid the obstacle.

Further, the present invention proposes an obstacle detecting method of a multi-channel LiDAR based cleaning robot including: a step of obtaining three-dimensional environment information around a cleaning robot using at least two laser modules having different emission angles of a transmission signal, a step of generating three-dimensional environment information for three-dimensionally defining an obstacle based on reception information of the laser modules and generating a projective map including three-dimensional environment information in a two-dimensional space map; and a coverage path generating step of extracting wall information using the projective map by a two-dimensional information based wall extracting algorithm and detecting low obstacle information using three-dimensional environment information obtained by the at least two laser modules.

Further, the present invention proposes a cleaning robot, including: an indoor information obtaining unit which obtains information on each point of an indoor space as three-dimensional information, a floor state determining unit which determines a state of the floor based on information on the first points related to the floor of the indoor space; a cleaning function control unit which controls a cleaning function of the indoor space based on the state of the floor; and a cleaning function performing unit which performs a cleaning function on the indoor space.

Further, in order to detect three-dimensional environment information including obstacle information of a cleaning robot, the present invention proposes a cleaning robot including: a multi-channel LiDAR unit including at least two laser modules having different emission angles of a transmission signal; a projective map generating unit which generates three-dimensional environment information for three-dimensionally defining an obstacle based on reception information of at least two laser modules and generates a projective map including three-dimensional environment information in a two-dimensional space map; a coverage path generating unit which determines a position of the obstacle on the space based on the projective map and generate a coverage path to avoid the obstacle; and a cleaning function performing unit which performs a cleaning function for an indoor space based on the coverage path.

According to the present invention, the following effects may be achieved through configurations for achieving the objects:

First, it is possible to precisely detect the state of the floor and sense low obstacles which are scattered on the floor.

Second, it is possible to precisely detect the slip of the cleaning robot.

Third, it is possible to improve cleaning and coverage performances.

The present invention furthermore relates to the following items:

1. A cleaning function control device, comprising:

an indoor information obtaining unit which obtains information on each point of an indoor space as three-dimensional information;
a floor state determining unit which determines a state of the floor based on information on the first points related to the floor of the indoor space; and
a cleaning function control unit which controls a cleaning function of the indoor space based on the state of the floor.

2. The cleaning function control device of item 1, wherein the indoor information obtaining unit uses at least one of a LiDAR sensor, a time of flight (TOF) sensor, and a rotatable laser range finder to obtain information on each point in the indoor space as three-dimensional information.

3. The cleaning function control device of item 1, wherein the floor state determining unit collects the information on the first points to generate information related to an undulation change of the floor and determines the state of the floor based on the information related to the undulation change of the floor.

4. The cleaning function control device of item 1, further comprising:

a floor material determining unit which determines a material of the floor based on the information on the first points,
wherein the cleaning function control unit controls a cleaning function for the indoor space based on the state of the floor and the material of the floor.

5. The cleaning function control device of item 1, further comprising:

an obstacle detecting unit which detects an obstacle located indoor based on the information on the first points and/or second points related to the indoor space,
wherein the cleaning function control unit controls a cleaning function for the indoor space based on the state of the floor and information on the obstacle.

6. The cleaning function control device of item 1, further comprising:

a slip determining unit which determines whether a device which performs the cleaning function slips based on distances to the obstacles obtained at different points,
wherein the cleaning function control unit controls a cleaning function for the indoor space based on the state of the floor and whether the device which performs the cleaning function slips.

7. The cleaning function control device of item 6, wherein the slip determining unit estimates an arrangement pattern of the obstacle based on distances to the obstacle from a third point which is any one of different points, estimates an arrangement pattern of the obstacle based on distances to an obstacle from a fourth point which is another one of different points, and matches the arrangement pattern of the obstacle estimated at the third point with the arrangement pattern of the obstacle estimated at the fourth point to determine whether the device which performs a cleaning function slips.

8. The cleaning function control device of item 7, wherein when the arrangement pattern of the obstacle estimated at the third point and the arrangement pattern of the obstacle estimated at the fourth point match, the slip determining unit uses particles located within a predetermined range with respect to the third point or the fourth point

9. The cleaning function control device of item 1, further comprising:

a foreign matter inflow amount detecting unit which detects an inflow amount of a foreign matter using a flow sensor attached to an inlet of the device which performs the cleaning function,
wherein the cleaning function control unit controls the cleaning function for the indoor space based on the state of the floor and the inflow amount of the foreign matter.

10. The cleaning function control device of item 1, wherein the indoor information obtaining unit includes:

a multi-channel LiDAR unit which includes at least two laser modules having different emission angles of a transmission signal to detect three-dimensional environment information including obstacle information of the cleaning robot; and
a projective map generating unit which generates three-dimensional environment information for three-dimensionally defining an obstacle based on reception information of at least two laser modules and generates a projective map including three-dimensional environment information in a two-dimensional space map.

11. The cleaning function control device of item 10, wherein the multi-channel LiDAR unit is located in a front upper portion of the movement direction of the cleaning robot and at least two laser modules are mounted to have different emission angles of a transmission signal in a downward horizontal direction.

12. The cleaning function control device of item 10, wherein the projective map generating unit generates shape information of an obstacle including a door sill, a ramp, and a cliff by analyzing a reception signal of the multi-channel LiDAR unit.

13. The cleaning function control device of item 10, wherein the projective map generating unit includes: a three-dimensional environment information generating unit which represents the three-dimensional environment information using a regular hexahedron of $n^3$ and determines a marking grid position and a grid marking value using horizontal position information and vertical position information of an obstacle obtained by the multi-channel LiDAR unit.

14. The cleaning function control device of item 10, wherein the projective map generating unit performs Hough transform on a binary projective map obtained by changing a projective map including height information into binary information of 1 or 0 to extract a linear area.

15. The cleaning function control device of item 13, wherein the projective map generating unit assigns a higher priority to an area which is not cleaned by comparing with a cleaning map and assigns a higher priority to a straight line which is close.

16. The cleaning function control device of item 10, further comprising:
a coverage path generating unit which determines a position of the obstacle on the space based on the projective map and generate a coverage path to avoid the obstacle.

17. The cleaning function control device of item 16, wherein the coverage path generating unit estimates the presence of the obstacle based on a vertical distance from each laser module to the floor and a downward horizontal emission angle of the transmission signal of the laser modules.

18. The cleaning function control device of item 16, wherein when the position of the obstacle on the space is determined, the coverage path generating unit also determines a size and a shape of the obstacle and generates a coverage path to access the obstacle at a shortest distance without colliding with the obstacle to avoid the obstacle.

19. An obstacle detecting device of a multi-channel LiDAR based cleaning robot including:

a multi-channel LiDAR unit which includes at least two laser modules having different emission angles of a transmission signal to detect three-dimensional environment information including obstacle information of the cleaning robot;

a projective map generating unit which generates three-dimensional environment information for three-dimensionally defining an obstacle based on reception information of at least two laser modules and generates a projective map including three-dimensional environment information in a two-dimensional space map; and

a coverage path generating unit which determines a position of the obstacle on the space based on the projective map and generate a coverage path to avoid the obstacle.

20. A cleaning robot, comprising:

an indoor information obtaining unit which obtains information on each point of an indoor space as three-dimensional information;

a floor state determining unit which determines a state of the floor based on information on the first points related to the floor of the indoor space;

a cleaning function control unit which controls a cleaning function of the indoor space based on the state of the floor; and

a cleaning function performing unit which performs a cleaning function on the indoor space.

**[Brief Description of Drawings]**

FIGS. 1 to 3 are conceptual views illustrating point cloud information obtained in different formats according to a state of a floor.
FIGS. 4 and 5 are exemplary views illustrating an operation principle of a TOF sensor.
FIG. 6 is a conceptual view illustrating point cloud information related to a low obstacle.

FIG. 7 is a referential view for explaining a method of detecting a slip situation of a cleaning robot.

FIGS. 8 and 9 are referential views illustrating distance information from a cleaning robot and obstacles obtained from two different points.

FIGS. 10 and 11 are referential views for explaining a method of matching obstacle information obtained from two different points.

FIGS. 12 to 17 are referential views for explaining functions which will be added to a cleaning robot.

FIG. 18 is a block diagram of an obstacle detecting device of a multi-channel LiDAR based mobile robot according to an exemplary embodiment of the present invention.

FIGS. 19 to 21 are flow charts of an obstacle detecting method of a multi-channel LiDAR based mobile robot according to an exemplary embodiment of the present invention.

FIGS. 22 and 23 illustrate a multi-channel LiDAR sensor applied in an exemplary embodiment of the present disclosure.

FIG. 24 illustrates grid information when three-dimensional environment information is represented by 1 byte, according to an exemplary embodiment of the present invention.

FIGS. 25 and 26 illustrate a height representing method of a 2byte projective map according to an exemplary embodiment of the present invention.

FIGS. 27 and 28 illustrate 1byte projective map displaying result of a three-dimensional obstacle according to an exemplary embodiment of the present invention.

FIG. 29 illustrates a result of binarization of a projective map according to an exemplary embodiment of the present invention.

FIG. 30 illustrates a process of detecting a floor to sense low obstacle information by a multi-channel LiDAR mounted in a cleaning robot to which an exemplary embodiment of the present disclosure is applied.

FIG. 31 illustrates a relationship of a cleaning robot and an obstacle when a cleaning robot to which an exemplary embodiment of the present invention is applied performs the cleaning.

FIG. 32 illustrates a process of selecting an optimal path from RRT to which an optimization problem of Equation 1 is applied.

FIGS. 33 and 34 illustrate a potential-field based path generating process through an optimization problem of Equation 1.

FIG. 35 is a view for explaining a movement range of a mobile robot which performs a backward operation according to an exemplary embodiment of the present invention.

FIG. 36 is a view for explaining a leash guider of a mobile robot according to an exemplary embodiment of the present invention.

FIG. 37 is a view illustrating a mobile root in which inwheel motor according to an exemplary embodiment of the present invention is provided.

FIG. 38 is a view for explaining an operation of a mobile robot which cleans a broad space such as a building by applying a plurality of small mobile robots according to an exemplary embodiment of the present invention.

FIG. 39 is a view illustrating a brush wheel of a mobile robot according to an exemplary embodiment of the present invention.

FIG. 40 is a view for explaining operations performed by using a brush wheel according to an exemplary embodiment of the present invention.

FIG. 41 is a view for explaining a screen displayed on a display unit of a mobile robot according to an exemplary embodiment of the present invention.

FIG. 42 is a block diagram schematically illustrating an internal configuration of a cleaning function control device according to an exemplary embodiment of the present invention.

FIG. 43 is a block diagram listing configurations which may be added in the cleaning function control device.

FIG. 44 is a block diagram schematically illustrating an internal configuration of a cleaning robot according to an exemplary embodiment of the present invention.

## [Detailed Description]

Hereinafter, exemplary embodiments of the present invention will be described in detail with reference to the accompanying drawings. In the figures, even though the parts are illustrated in different drawings, it should be understood that like reference numerals refer to the same or equivalent parts of the present invention throughout the several figures of the drawing. Furthermore, when it is judged that specific description on known configurations or functions related in the description of the present invention may unnecessarily obscure the essentials of the present invention, the detailed description will be omitted. Further, hereinafter, exemplary embodiments of the present invention will be described. However, it should be understood that the technical spirit of the invention is not limited to the specific embodiments, but may be changed or modified in various ways by those skilled in the art.

Hereinafter, in the present invention, a robotic vacuum cleaner to which an algorithm of measuring a state of a floor, specifically, an undulating state of a floor or sensing a low obstacle based on a pint cloud is applied will be described.

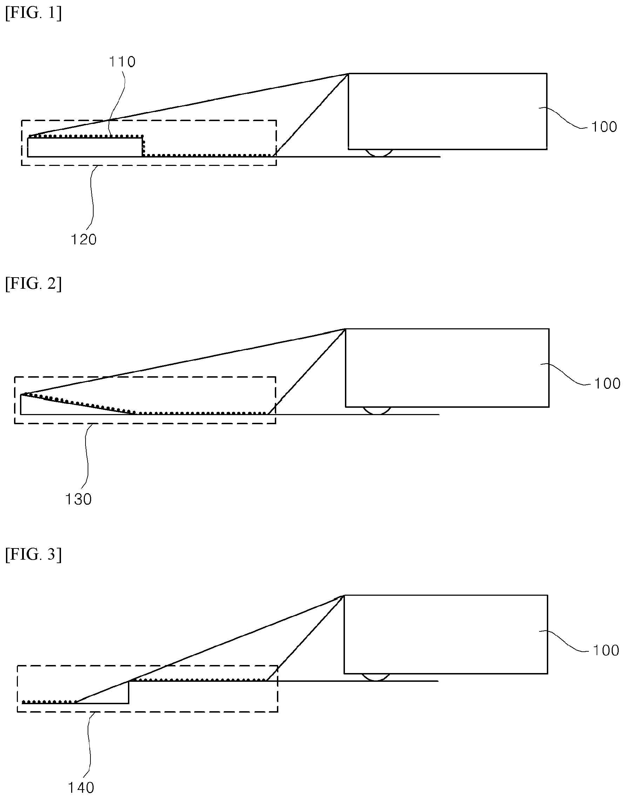

FIGS. 1 to 3 are conceptual views illustrating point cloud information obtained in different formats according to a state of a floor.

The cleaning robot 100 obtains information on a surrounding environment using a sensor which obtains three-dimensional information of an object, such as a LiDAR sensor or a time of flight (TOF) sensor, as three-dimensional information. When each point of the floor is defined as point 110, the cleaning robot 100 obtains information on each point 110 using the LiDAR sensor or the TOF sensor as three-dimensional information.

When information on each point 110 is obtained as three-dimensional information, it is possible to distinguish a state of the floor, for example, an undulation of the floor by information on a point cloud which is a set of the points 110. In the present invention, the cleaning robot 100 measures the state of the floor, for example, the undulating state of the floor, based on information of a point cloud for the floor.

As illustrated in FIGS. 1 to 3, a portion where undulation is formed on the floor in a home environment of a normal home is a door sill, a ramp, or a cliff. FIG. 1 is an example of a door sill, FIG. 2 is an example of a ramp, and FIG. 3 is an example of a cliff.

In order to safely drive the cleaning robot 100 and improve a cleaning performance, the cleaning robot 100 needs to distinguish an undulating portion of the floor. However, in the case of robots which are currently commercially used, information used to distinguish the undulation of the floor is very restrictive so that when the robots encounter such a situation, it is not easy to correctly distinguish the undulation of the floor.

For example, when the robot ascends the door sill or the ramp, the robot is forwardly lifted so that a pitch angle of the robot is generated. Therefore, it is not easy to distinguish whether the robot ascends the door sill or the ramp.

Further, when the robot ascends the door sill, if a front portion of the robot is lifted, a bottom sensor mounted on the robot is exposed. Therefore, the robot may erroneously recognize a state of the floor as a cliff.

In the present invention, the cleaning robot 100 uses information of a point cloud obtained by a LiDAR sensor and a ToF sensor to obtain information on the floor in front of the cleaning robot. The information 120, 130, and 140 of the point cloud may vary depending on the state of the floor as illustrated in FIGS. 1 to 3 so that the cleaning robot 100 may detect the state of the floor based on the information 120, 130, and 140 of the point cloud.

Further, the cleaning robot 100 detects a undulation changing situation of the floor based on the information 120, 130, and 140 of the point cloud to perform an appropriate control function in accordance with the state of the floor.

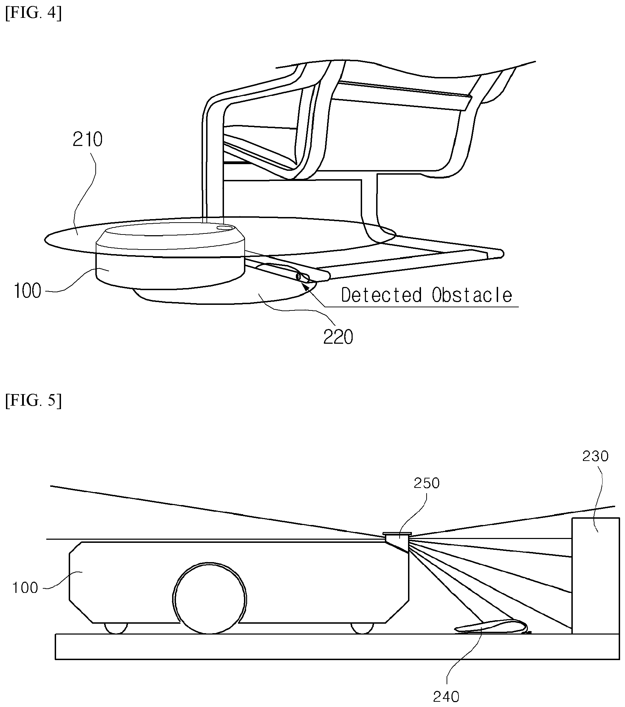

When the cleaning robot 100 uses a ToF sensor as a sensor for achieving three-dimensional information of an object, the three-dimensional information of the object may be achieved using a TOF based 360-degree ranger finder. FIGS. 4 and 5 are exemplary views illustrating an operation principle of a TOF sensor. FIG. 4 illustrates an example of an operation of the cleaning robot 100 mounted with a two-channel ranger finder which uses a high beam 210 and a low beam 220 and FIG. 5 illustrates an example of an operation of the cleaning robot 100 mounted with a multi-channel range finder Multi-ch LRF) 250 which is capable of sensing both a high obstacle 230 and a low obstacle 240. As illustrated in FIG. 4, when the cleaning robot 100 uses the two-channel range finder, the cleaning robot 100 may use any one of channel (for example, a low beam 220) in a direction horizontal to a ground and use the other channel (for example, a high beam 210) in a direction oblique to the ground.

When the cleaning robot 100 uses the TOF based 360-degree range finder, it is possible not only to detect the state of the floor, but also to detect a carpet, and an obstacle and estimate a position.

As described above, when the LIDAR sensor and the TOF sensor are used, the cleaning robot 100 may stereoscopically reconstruct the surrounding environment such as a floor, based on the information of the cloud point. The cleaning robot 100 separates information on the floor, from the information on the reconstructed surrounding environment to detect a material of the floor (tile, wood floor, or carpet) or low obstacles (clothes, animal excrements, or blocks) scattered on the floor as well as a undulating state (the door sill, the ramp, or the cliff) of the floor, which will be described below. (1) Detect material of floor

In the driving and cleaning performance of the cleaning robot 100, a material characteristic of the floor is one of influential factors. Therefore, it is very important to analyze and classify the material of the floor.

In the present invention, the cleaning robot 100 detects the material of the floor based on information on the floor obtained from the information of the point cloud. The floor on which the cleaning robot 100 is driven may be classified into a tile, a wood floor, a linoleum, or a carpet. The tile, the wooden floor, the linoleum, and the carpet have characteristics of the material. The cleaning robot 100 classifies the characteristics of the material of the floor based on the information of the floor to smoothly perform the cleaning function in consideration of the material of the floor.

(2) Detect low obstacle

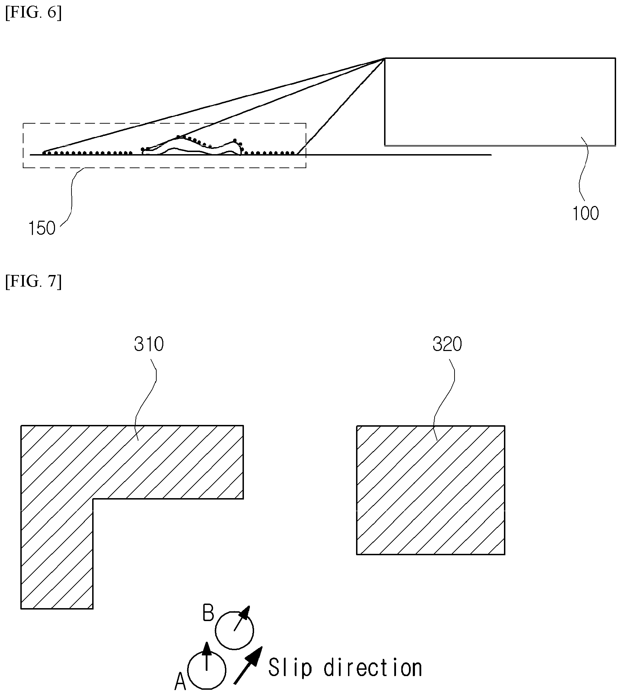

FIG. 6 is a conceptual view illustrating point cloud information related to a low obstacle.

One of factors which interrupt a course and the cleaning of the cleaning robot 100 of a home environment of a normal home is obstacles (for example, clothes, animal excrements, or blocks) which is lower than an obstacle sensing sensor mounted in the cleaning robot 100. The robots of the related art having a cleaning robot cannot sense the low obstacles so that it is not possible to avoid the low obstacles. Therefore, the robots fall into an inoperable state or cause malfunctions. When the cleaning robot senses the low obstacles in advance to avoid the low obstacles, it is possible to guarantee safe driving and high cleaning performance of the cleaning robot 100.

In the present invention, the cleaning robot 100 may easily detect the low obstacles scattered on the floor based on the information on the floor obtained from the information 150 of the point cloud and thus avoidance driving and cleaning are possible. According to the present invention, when the cleaning robot 100 may appropriately handle the low obstacle, a cleaning success rate and a coverage performance of the cleaning robot 100 may be improved.

Next, a slip detecting method of the cleaning robot 100 will be described. In the following description, the cleaning robot 100 will be described as an example to which a slip detecting method is applied, but the slip detecting method proposed in the present invention is not limited thereto, and is applicable to any of robots which are driven using wheels.

The cleaning robot 100 may sense the slip using a gyro sensor and a passive encoder which is a front wheel recognizing sensor. In this case, the cleaning robot 100 detects the slip by comparing a rotation speed estimated from encoders of both wheels and gyro information, detects the movement using the passive encoder and checks whether the cleaning robot 100 actually moves by comparing the speed obtained from the encoders of both wheels.

However, the passive encoder differently rotates depending on the state of the floor. Further, there is a problem in that inaccurate information is provided in an environment where a height difference of a driving surface is generated, such as severely undulating area, the door sill, or the carpet.

The cleaning robot 100 may sense the slip based on an optical flow of an infrared signal (or a laser signal). In this case, the cleaning robot 100 detects its motion based on the flow of signals between a light emitting element and a light receiving element attached on a bottom surface and compares the motion information with the encoder information of the wheel to determine whether the cleaning robot 100 is in a slip situation or a restraint situation.

However, since the signal is very sensitive to a reflectance of the floor, when the floor is not even, it is difficult to sense the slip.

In the present invention, in order to solve this problem, a method of detecting the slip of the cleaning robot 100 based on a laser odometry will be described.

The laser odometer refers to a method of estimating a movement amount of the cleaning robot 100 using a distance from a single/multi channel 360-degree laser range finder to the obtained surrounding obstacle and cumulatively adding the estimated movement amount of the cleaning robot 100 from an initial position to estimate a current location. Here, when a difference between the surrounding obstacle information measured at the present time and the surrounding obstacle information obtained at a previous time is divided by a time difference, a speed of the cleaning robot 100 may be estimated.

FIG. 7 is a referential view for explaining a method of detecting a slip situation of a cleaning robot.

When the cleaning robot 100 slips from a point A to a point B, in order to figure out the slip of the cleaning robot 100, obstacles 310 and 320 around the cleaning robot 100 need to be used. In this case, in the present invention, information on the obstacles 310 and 320 around the cleaning robot 100 is obtained using the multi-channel (or a single channel) laser range finder.

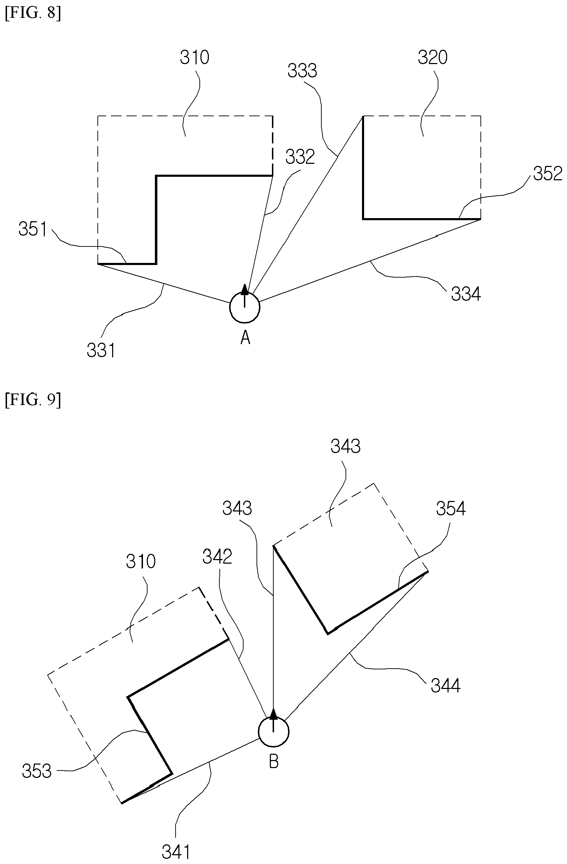

FIGS. 8 and 9 are referential views illustrating distance information from a cleaning robot 100 and obstacles 310 and 320 obtained from two different points. FIG. 8 illustrates distance information 331, 332, 333, and 334 between the cleaning robot 100 and the obstacles 310 and 320 measured at the point A and FIG. 9 illustrates distance information 341, 342, 343, and 344 between the cleaning robot 100 and the obstacles 310 and 320 measured at the point B.

The cleaning robot 100 moves or rotates the information 351, 352, 353, and 354 on the obstacles 310 and 320 obtained at two different points to match each other to calculate the movement amount at two points.

In the present invention, the cleaning robot 100 may match information 351, 352, 353, and 354 on obstacles 310 and 320 obtained at two different points by applying a particle filter.

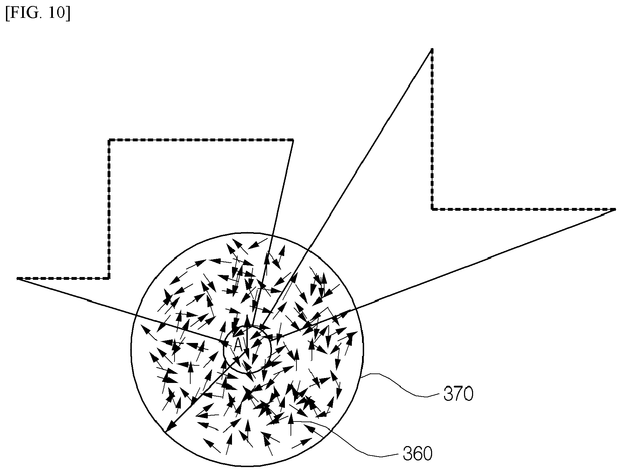

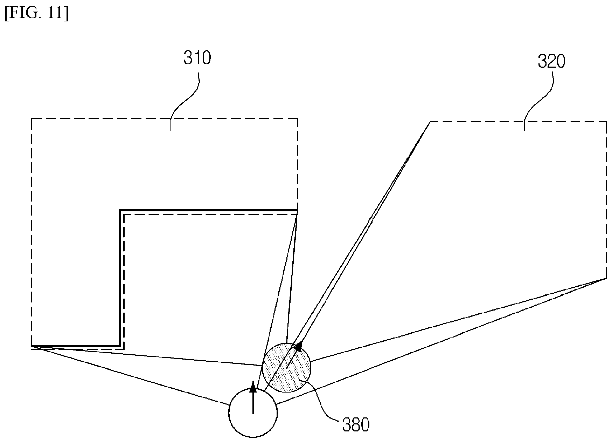

FIGS. 10 and 11 are referential views for explaining a method of matching obstacle information obtained from two different points.

FIG. 10 illustrates a process of matching obstacle information obtained at the point B with respect to the point A. Random particles 360 are located within a particle boundary 370 determined based on the point A and have information on a candidate which is arbitrarily generated, such as a position or a posture angle.

When it is assumed that information on the cleaning robot 100 at the point B is information of a specific random particle and obstacle information obtained from two points match based on the information of each random particle, it is possible to find a random particle having the most similar information to the obstacle information measured at the point B. By doing this, the information of the random particle may be estimated as information on the cleaning robot 100 at the point B.

FIG. 11 illustrates a result of matching the obstacle information at the point A and the point B based on the information of the selected random particle 380. As illustrated in FIG. 11, when the obstacle information matches to each other so that the obstacles 310 and 320 are disposed in the same position, a relative position difference at each point of the cleaning robot 100 is figured out. Therefore, it is possible to detect how much the cleaning robot 100 slips.

Further, when the detected information is divided by a time difference (a difference between a time when the cleaning robot 100 is located at the point A and a time when the cleaning robot 100 is located at the point B, a current speed of the cleaning robot 100 may be calculated.

Further, when the number of random particles 360 is increased and a probable error for the location of the cleaning robot 100 is considered, it is possible to predict more precise information.

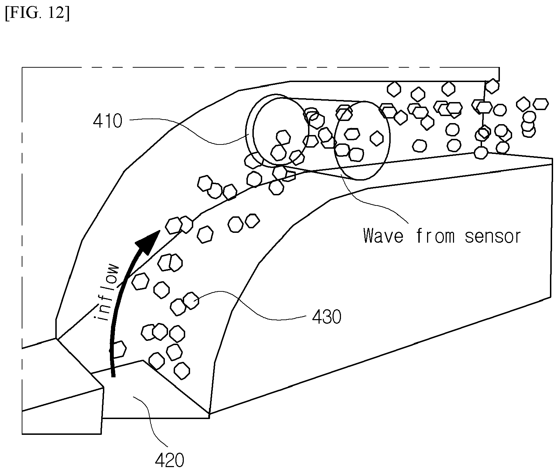

In the meantime, as illustrated in FIG. 12, the cleaning robot 100 may detect an inflow amount of dusts 430 using a flow sensor 410 mounted at one side of an inlet 420. To this end, the cleaning robot 100 may use a ultrasonic flow sensor or a TOF based flow detector as a flow sensor. When the cleaning robot 100 detects the inflow amount of the dust using the flow sensor, as compared with the optical sensor, the cleaning robot 100 may be less sensitive to the dust attached to the window.

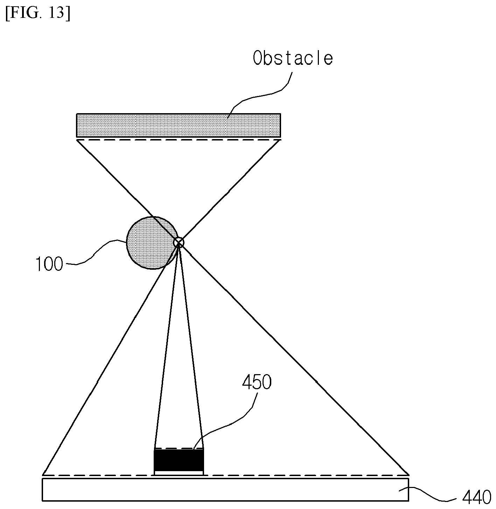

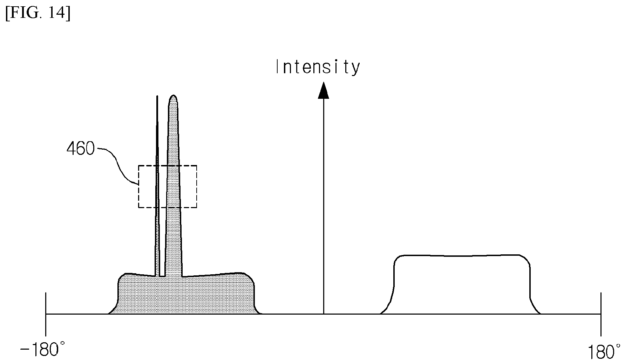

In the meantime, as illustrated in FIGS. 13 and 14, the cleaning robot 100 may configures a docking guiding system using a TOF based 360-degree range finder.
As illustrated in FIG. 13, a docking station 450 is configured of a material having a high reflectance at one side of a wall 440. In this case, various patterns may be applied to the docking station 450.

As seen from an intensity graph measured from a laser receiver mounted in the cleaning robot 100, as illustrated in FIG. 14, a reflectance of a docking portion 460 is high so that it is possible to find a location of the docking station 450.

Output information of the TOF based range finder represents a distance value so that it is possible to find out an accurate location of the docking station. Therefore, it is possible to improve a docking performance.

In the meantime, the cleaning robot 100 may perform a cleaning motion using forward movement or backward movement. In this case, the cleaning robot 100 may perform the above-described function using the TOF based 360-degree range finder.

The cleaning robot 100 mounted with the TOF based 360-degree range finder may freely backwardly move regardless of a mounting position of the sensor such as a front side or a rear side so that unlike a robot of the related art which only forwardly moves, various motions may be applied as follows.

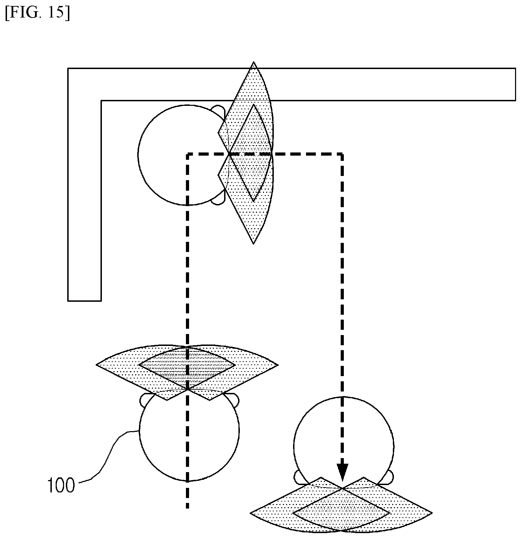

First, when the direction is switched at 180 degrees, as illustrated in FIG. 15, the cleaning robot 100 does not rotate, but immediately backwardly move to save the entire cleaning time.

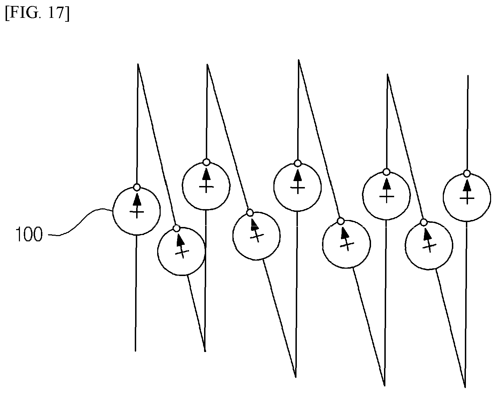

Second, when intensively cleaning an area with lots of dusts, the cleaning robot 100 may clean while moving back and forth as illustrated in FIG. 17 to sufficiently remove the dusts.

In this case, the cleaning robot 100 cleans the area without rotating, so that a position estimating performance is maintained and the slip which is frequently caused by the rotation may be reduced. Further, the cleaning robot 100 uses a brush and mops in both directions so that a problem of the cleaning robot of the related art which just moves straight in that the brush and the mop are used only in one direction so that the dusts are attached only in one direction may be solved.

Next, an obstacle detecting device and method of a multi-channel LiDAR based mobile robot and a mobile robot including the same will be described.

The cleaning robot is a robot which perceives surrounding environments using sensors such as a vision sensor, an infrared sensor, and a ultrasonic sensor and moves without causing collision with surrounding environment to perform the cleaning.

The cleaning robot employs a method of cleaning while avoiding the collision with obstacles in the surrounding environment using an array of infrared or ultrasonic sensors which measure a distance with a pin point. Such a pin point distance measurement based sensor configuration prevents the collision with the environmental obstacles but cannot sense an obstacle which is lower than the mounted sensors. Further, it is difficult to generate map information of a working area so that a cleaning time is long and a cleaning coverage is low.

The cleaning robot includes a camera and applies a visual simultaneous localization and mapping (V-SLAM) so that a map for an entire working area is created and information on the entire cleaning area is stored based on the map, and then the map and the information are used to estimate the location or determine a cleaning location. However, in order to sense the obstacle, the cleaning robot includes pin point distance measuring sensors, but cannot sense the obstacles which are lower than the sensor. Further, the cleaning robot cannot know the collision with the obstacle in advance, but senses the collision only when encountering the obstacle so that the driving stability is degraded.

A camera based position estimating system which is employed to the cleaning robot may generate a map by the light and changes a position estimation performance. The change of the position estimation performance by the light is improved by applying a single channel laser scan sensor to the cleaning robot. Further, the obstacle information is directly used to create the map, so that the cleaning speed and the efficiency of the cleaning robot are improved.

The laser scan sensor based cleaning robot of the related art cannot sense a low obstacle and cannot know the situation in advance before encountering the vertical environment (door sill, cliff, and ramp).

The problems are caused because all surrounding environments are obtained and represented as two-dimensional planar data. Another object of the present invention is to introduce a cleaning robot mounted with a multi-channel LiDAR to obtain the surrounding environment as three-dimensional space information and provide an obstacle detecting device and method of a multi-channel LiDAR based mobile robot and a mobile robot including the same.

Another object of the present invention is to provide an obstacle detecting device and method of a multi-channel LiDAR based mobile robot which distinguishes walls, obstacles (including low obstacles) and vertical environments and a mobile robot including the same.

Still another object of the present invention is to provide an obstacle detecting device and method of a multi-channel LiDAR based mobile robot including a collision course avoidance algorithm which increases the efficiency of the cleaning robot while avoiding the collision, based on previously measured environment obstacle information and a mobile robot including the same.

By doing this, the present invention includes a multi-channel LiDAR which is rotatable and transmits and receives signals at various angles to three-dimensionally obtain the obstacle information on the surrounding environment of the mobile robot to detect an obstacle in front of the mobile robot and a low obstacle at a front lower end.

Further, the present invention may generate a projective map in which a grid map includes three-dimensional information on the surrounding environment obtained through the multi-channel LiDAR so that it is possible to sufficiently obtain mobile robot surrounding environment information and obstacle information having a low height at a front lower end with a low storage capacity and a computational ability.

Further, even when three-dimensional information on the surrounding environment of a mobile robot is obtained through the multi-channel LiDAR, the present invention generates a projective map to apply techniques applied to the two-dimensional environment information as it is.

Further, even when three-dimensional information on the surrounding environment of a mobile robot is obtained through the multi-channel LiDAR, the present invention generates a projective map to ensure the safety of the mobile robot and a maximum cleaning area.

Hereinafter, the present invention will be described in detail with reference to the drawings.

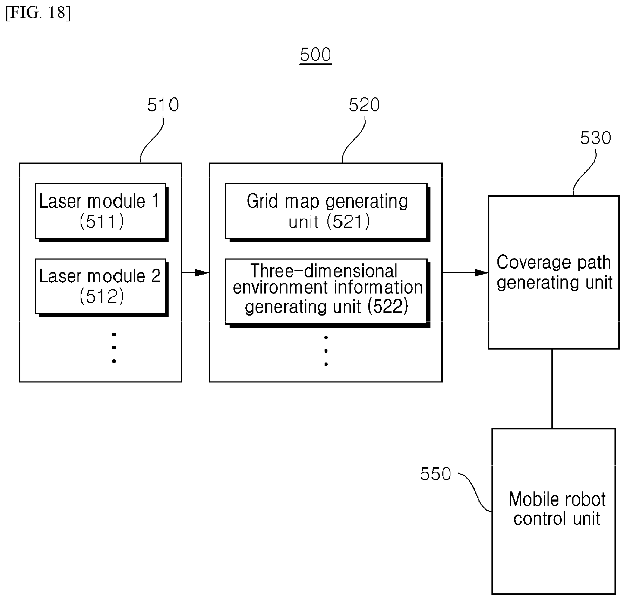

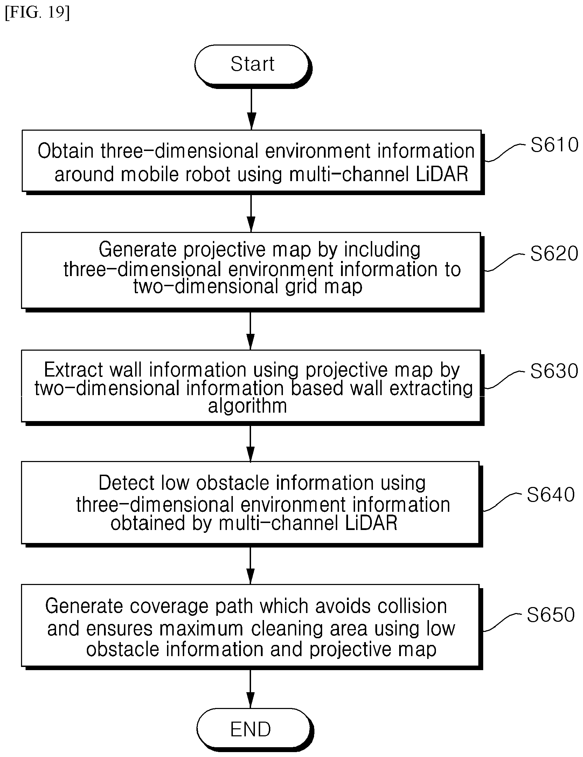

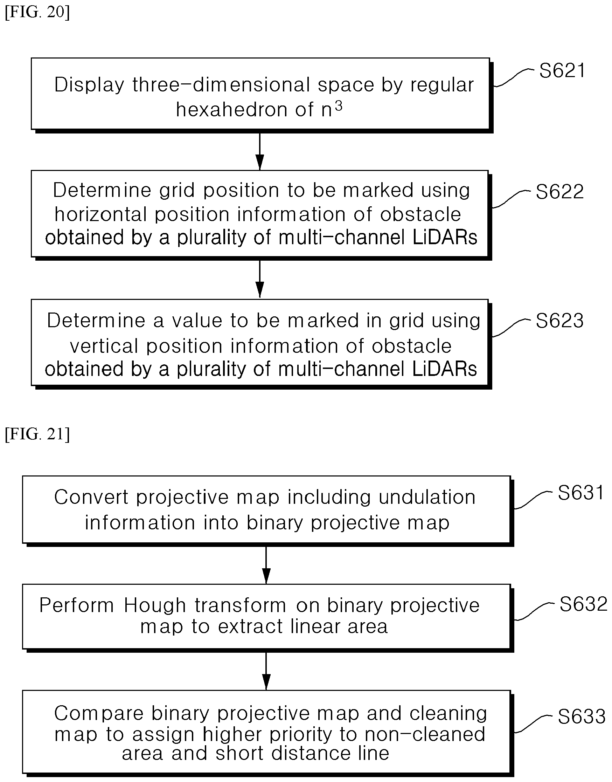

FIG. 18 is a block diagram of an obstacle detecting device of a multi-channel LiDAR based mobile robot according to an exemplary embodiment of the present invention and FIGS. 19 to 21 are flow charts of an obstacle detecting method of a multi-channel LiDAR based mobile robot according to an exemplary embodiment of the present invention.

In order to detect three-dimensional environment information including obstacle information of a mobile robot, an obstacle detecting device 500 of a multi-channel LiDAR based mobile robot according to an exemplary embodiment of the present invention includes a multi-channel LiDAR unit 510 including at least two laser modules having different emission angles of a transmission signal, a projective map generating unit 520 which generates the three-dimensional environment information for three-dimensionally defining an obstacle based on reception information of at least two laser modules and generates a projective map including the three-dimensional environment information in a two-dimensional space map, and a coverage path generating unit 530 which determines a location of the obstacle on the space based on the projective map and generate a coverage path to avoid the obstacle to generate an optimal path.

The three-dimensional environment information includes information on the obstacle and the information on the obstacle may include a location, a size, and a shape of the obstacle. Further, the two-dimensional space map may be formed as a two-dimensional grid map as one example. The coverage path generating unit 530 may determine the size and the shape of the obstacle when the position of the obstacle on the space is determined and accesses at a shortest distance without causing the collision with the obstacle to generate a coverage path to avoid the obstacle.

The multi-channel LiDAR 510 is located at a front upper portion of a movement direction of the mobile robot 100 and at least two laser modules 511 and 512 may be mounted to have different transmission signal emitting angles in a lower horizontal direction. In the present exemplary embodiment, the multi-channel LiDAR refers to one LiDAR including laser modules which emit or receive a plurality of lasers.

The projective map generating unit 520 may include a three-dimensional environment information generating unit 522 which generates shape information of an obstacle including a door sill, a ramp, and a cliff by analyzing a reception signal of the multi-channel LiDAR unit 510 and represents the three-dimensional environment information using a $n^3$ regular hexahedron.

The projective map generating unit 520 may determine a marking grid location and a grid marking value using horizontal location information and vertical location information of the obstacle obtained in the multi-channel LiDAR unit 510 and extract a straight area by Hough transform of a binary projective map obtained by changing the projective map including height information to binary information of 1 or 0.

The projective map generating unit 520 assigns a higher priority to an area which is not cleaned by comparing with a cleaning map and assigns a higher priority to a straight line which is close.

The coverage path generating unit 530 may estimate presence of an obstacle based on a vertical distance from at least two laser modules 511 and 512 to the floor and a lower horizontal emission angle of the transmission signal of the laser modules.

The mobile robot 100 may further include a mobile robot control unit 550 which controls the mobile robot 100 and a grid map generating unit 521 which generates a two-dimensional grid map. Further, the mobile robot 100 may further include a three-dimensional environment information generating unit 522 which generates three-dimensional environment information using a signal obtained from the multi-channel LiDAR unit 510.

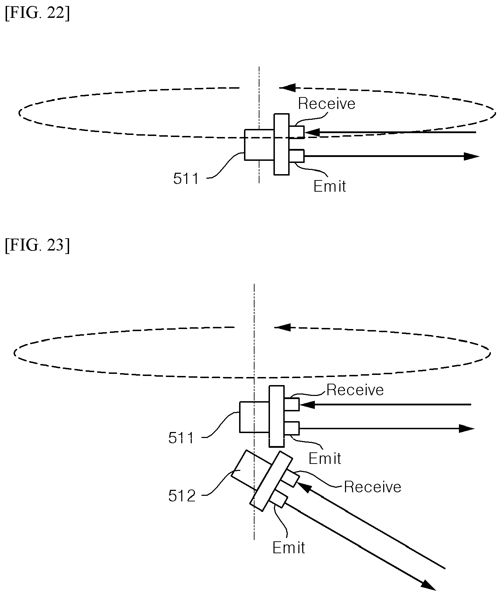

FIGS. 22 and 23 illustrate a structure of a multi-channel LiDAR sensor applied in an exemplary embodiment of the present disclosure and FIG. 5 is a schematic view of a process of sensing an obstacle using a multi-channel LiDAR by a cleaning robot according to an exemplary embodiment of the present invention.

First, a structure of a multi-channel LiDAR which is adopted by the cleaning robot 100 according to an exemplary embodiment of the present invention will be introduced. The LiDAR 510 which is applied to the cleaning robot 100 rotates a plurality (two or more) of laser emitting/receiving sets 511 and 512 at 360 degrees to three-dimensionally obtain surrounding obstacle information in step S610. In the present exemplary embodiment, the three-dimensional environment information refers to three-dimensional information on the surrounding of the cleaning robot 200 and the three-dimensional environment information also includes information on the obstacle.

Hereinafter, the description will be made with reference to FIGS. 22, 23, and 5. A driving algorithm of a cleaning robot based on three-dimensional information obtained from the cleaning robot 100 mounted with a down-sized multi-channel LiDAR 511 and 512 illustrated in FIGS. 22 and 23 and the multi-channel LiDAR 510 is proposed. The multi-channel LiDAR 510 illustrated in FIG. 23 includes to laser modules 511 and 512. The first laser module 511 transmits a signal and receives a reflected signal in a horizontal direction to detect an obstacle in the horizontal direction and the second laser module 512 transmits a signal to a lower horizontal direction and receives a reflected signal to detect a low obstacle. The cleaning robot 100 obtains a three-dimensional point cloud for the surrounding environment and the following advantages which cannot be obtained from the cleaning robot of the related art may be obtained using the three-dimensional point cloud.

    (1) distinguish low obstacle (small toys or clothes)
    (2) distinguish vertical environment (door sill, ramp, and cliff)
    (3) plan collision avoidance rout based on three-dimensional regional map

Details of the above-mentioned advantages will be described as follows.

Generally, low obstacles (for example, toy blocks, socks, or clothes) are stuck in the inlet or wheels of the cleaning robot to cause troubles so that the low obstacles need to be considered for the purpose of safe driving of the cleaning robot. However, the infrared or ultrasonic based obstacle sensing cleaning robots of the related art cannot sense the obstacle which is lower than the position of the sensors.

Specifically, in a single-channel laser scan sensor based cleaning robot having excellent map generating and position estimating performances, a position of the sensor is set to the highest end of the robot to improve the SLAM performance, so that it is impossible to sense the lower obstacle.

As compared with the cleaning robot of the related art, the multi-channel LiDAR based cleaning robot 100 according to the exemplary embodiment of the present invention not only senses a horizontal obstacle, but also measures the lower end of the cleaning robot. Therefore, it is possible to sense low obstacles regardless of the height of the cleaning robot and the position of the sensor while maintaining excellent SLAM performance, similarly to the single-channel scan sensor based cleaning robot of the related art.

The vertical environment is an important environment which greatly affects the driving and position estimating performance of the cleaning robot. Cleaning robots (bumper-based, infrared or ultrasonic wave based, or single channel laser scan sensor based cleaning robots) which horizontally measure the obstacles cannot check the vertical environment in advance so that when the cleaning robots encounter the environment, the situation is perceived or ignored. When the robot cleaning climbs the door sill or an inclination (a fixing device of a bar chair), it affects the position estimating performance of the cleaning robot so that the cleaning performance is lowered. Further, in the case of a cliff, when the cleaning robot falls into the cliff, the cleaning robot cannot operate any more so that a bottom measuring sensor is mounted to prevent the cleaning robot from falling into the cliff. The bottom measuring sensor is also mounted in the cleaning robot to sense only the situation in front of the wheel so that when the cleaning robot rotates or rapidly moves, it is difficult to improve the stability of the cleaning robot in advance.

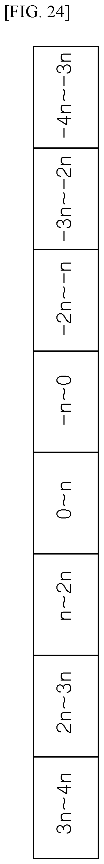

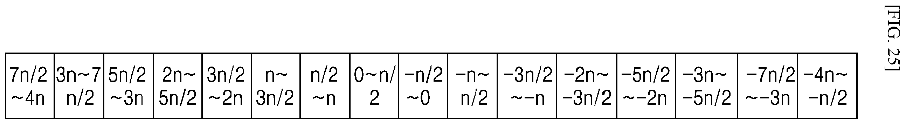

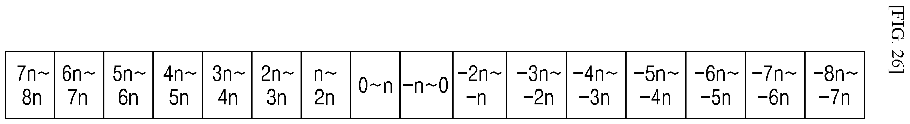

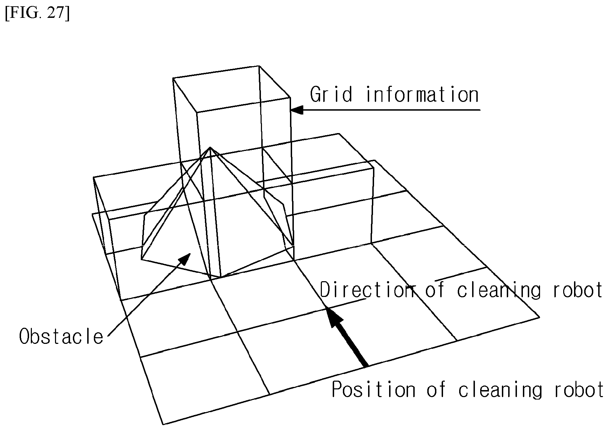

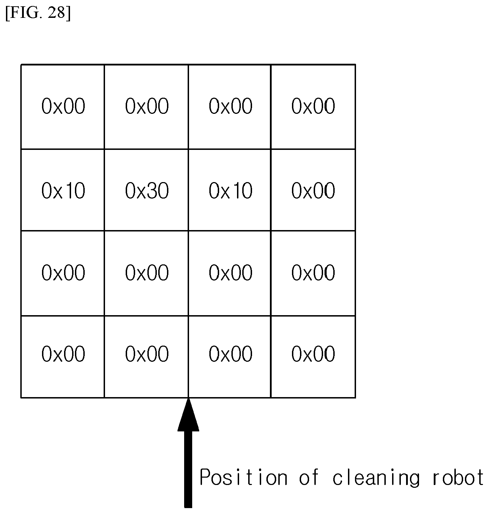

FIGS. 1 to 3 a schematic view of a process of distinguishing a vertical environment based on three-dimensional environment information obtained from the multi-channel LiDAR in a cleaning robot according to an exemplary embodiment of the present invention. FIG. 24 illustrates grid information when three-dimensional environment information is represented by 1 byte (8 bits), according to an exemplary embodiment of the present invention. FIGS. 25 and 26 illustrate a height representing method of a 2byte projective map according to an exemplary embodiment of the present invention. FIGS. 27 and 28 illustrate 1byte projective map representing result of a three-dimensional obstacle according to an exemplary embodiment of the present invention.

When the cleaning robot 100 uses a multi-channel LiDAR 510, it is possible to obtain obstacle information illustrated in FIGS. 1 and 3 for the vertical environment and it is possible to plan a coverage path of the cleaning robot in advance based thereon. Therefore, before encountering the vertical environment, the cleaning robot may sense and avoid the vertical environment.

A laser scan sensor based cleaning robot among cleaning robots of the related art may sense the obstacles in a state when the cleaning robot is spaced apart from the surround obstacle information (does not encounter) so that it is possible to plan a movement path which may avoid the collision in advance. However, as mentioned above, it is difficult to sense a low obstacle and distinguish the vertical environment, so that there is still a risk of collision with the obstacle.

The cleaning robot 100 to which the multi-channel LiDAR 510 is applied provides three-dimensional information for the surroundings so that it is possible to plan a path which avoids the collision with the obstacles which affects the safe driving of the robot including the vertical environments before encountering the obstacles.

A projective map which displays a surrounding three-dimensional information of the cleaning robot obtained by the multi-channel LiDAR 510 disclosed in the present invention in a small storage space without causing information loss is proposed. The cleaning robot needs to maintain a low manufacturing cost, so that it is difficult to guarantee a large memory size and a high computational ability. That is, there is a limitation to apply the point cloud which requires a large storage capacity and an excellent computational performance which has been used for mobile robot studies of the related art. In the disclosure of the present invention, a projective map which stores obstacle information of the surrounding of the cleaning robot and the map information is proposed without causing the storage space is proposed.

The general cleaning robot has a small storage capacity and is utilized even with a small computation performance so that a grid map is mainly used. However, a spatial dimension of the point cloud which three-dimensionally represents the environment is one-dimension higher than the two-dimensional grid map, so that the point cloud requires more storage spaces. Therefore, in the cleaning robot, a computational ability and a storage space are restricted. Therefore, a projective map which may include three-dimensional information is generated in the grid map in step S620.

(1) The three-dimensional space is represented using a regular hexahedron of $n^3$ in step S621.
(2) A grid position to be marked is determined using horizontal position information of an obstacle obtained by the LiDAR in step S622.
(3) A value to be marked in the grid is determined using vertical position information of an obstacle obtained by the LiDAR in step S623.

For example, when the three-dimensional surrounding space is represented using a hexahedron of $3^3$ ($cm^3$), the three-dimensional surrounding space is represented with grids of a regular hexahedron of 3 cm X 3 cm X 3 cm.

Here, when each grid is represented by 1 byte (8 bits), it is determined as illustrated in FIG. 24.

As illustrated in FIG. 24, when each bit is assigned using a height information grid size, three-dimensional information may be represented using a three-dimensional grid map without losing the information. A projective map generating method of FIG. 24 will be described in more detail using the following example.

For example, when a size of the grid is 1.5 cm (n=1.5), if a vertical position of the obstacle is 4.5 cm from the ground, it may be represented as follows. When it is represented using a hexadecimal digit, a value to be input to the grid is 0x70.

0 : 1 : 1 : 1 : 0 : 0 : 0 : 0

As illustrated in FIGS. 25 and 26, when the grid map is represented by 2 byte (16 bits), it is possible to represent the grid map more finely with a measurement range of one byte grid and it is possible to represent a wider range with a grid size of the one byte grid.

As illustrated in FIGS. 24 to 26, a method of generating a projective map of a three-dimensional environment information using a two-dimensional grid map without having a three-dimensional arrangement or a three-dimensional point cloud and without losing the position information is proposed. A method of representing three-dimensional information in the cleaning robot using the method of FIGS. 24 to 26 may be illustrated in FIGS. 25 and 26.

As illustrated in FIGS. 27 and 28, the three-dimensional obstacle measured in the cleaning robot may be represented in the two-dimensional projective map without causing information loss. As illustrated in FIG. 27, an obstacle of a position (2,1) of a local map is within a height of 1n, so that M(2,1) = 00010000 (here, M represents a local map). Therefore, when the obstacle is represented by a hexadecimal digit, as illustrated in FIG. 28, M(2,1)=0x10.

An ability of the cleaning robot which distinguishes a wall is one of very important abilities. An ability of the cleaning robot which is closely attached to a boundary of a wall and a floor or a corner where a lot of dusts are gathered to clean is an important measure of the cleaning performance of the cleaning robot which collects a lot of dusts. Therefore, a wall following function which distinguishes the wall from the surrounding environment information and approaches the wall to move along the wall without collision is very important.

Differently from the cleaning robot of the related art which does not move straightly along the wall due to the error of the sensor using one or two infrared sensors or range finder sensors but moves in a zigzag pattern, laser scan sensor based cleaning robots which obtain surrounding information at 360 degrees precisely distinguish the wall therearound using more environment information and provide more information (for example, a direction of the wall).

Generally, a three-dimensional multi-channel LiDAR based cleaning robot uses three-dimensional environment information so that it is difficult to use two-dimensional laser scan sensor based wall extraction algorithms of the related art.

However, even though the multi-channel LiDAR based mobile robot 100 according to the exemplary embodiment of the present invention obtains three-dimensional environment information, the mobile robot 100 may use the techniques used in the two-dimensional environment information of the related art as it is by easily collecting all information using a projective map through the following processes.

(1) A projective map including height information is converted into binary information represented by 1 or 0.

(2) The binary projective map is subjected to Hough transform to extract a linear area.

(3) A higher priority is assigned to an area which is not cleaned as compared with a cleaning map and a higher priority is assigned to a close straight line.

To be more specific, in order to extract information on the wall, a projective map storing three-dimensional information is compressed to be two-dimensional information through a binarization process which represents information by 1 and 0. The process of binarizing the projective map may be represented by algorithm 1) in step S630.

```
Algorithm 1)
if M(n,m) > 0
       B(n,m) = 1;
else
       B(n,m) = 0;
```

Here, B is a binary map which is obtained by representing the local map only with 1 and 0.

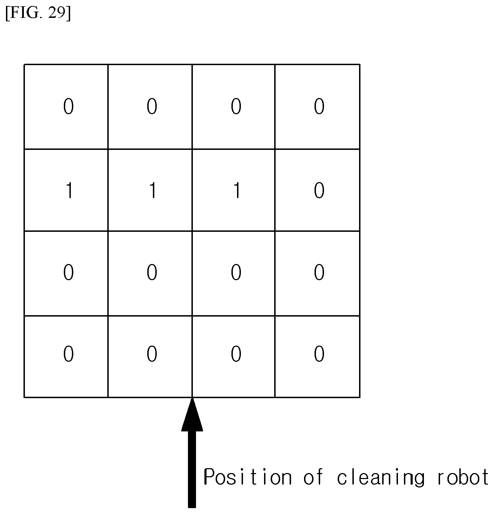

As seen from Algorithm 1), the projective map M is subjected to the above process to be converted into a binary map B and is reduced to two-dimensional information in step S631. Information of FIG. 28 is binarized to be represented in FIG. 29.

FIG. 29 illustrates a result of binarization of a projective map according to an exemplary embodiment of the present invention.

Algorithms which are frequently used in the past may be easily applied using a binary map as represented in FIG. 29. Normally, since a linear component is very strong in the wall, in the present specification, Hough transform which is frequently used for image processing or obstacle map analysis is used to extract linear components.

When the projective map which represents three-dimensional environment information is converted into a binary map through binarization and linear components are extracted through Hough transform to estimate a wall, a priority is assigned to each estimated wall in step S633. A priority of each wall is assigned by the following criteria.

(1) Whether to clean. A higher priority is assigned to a place which is not cleaned.

(2) Distance relationship. The closer the distance, the higher the priority.

A priority is assigned to all walls estimated on the basis of the above two criteria and the cleaning robot follows the wall having the highest priority among the walls.

Low obstacles which are not sensed by the cleaning robots of the related art, such as clothes, toy blocks, or animal excrements which may be sucked into the robot, greatly affect the safe driving and the cleaning performance of the robot. Therefore, the low obstacles are necessarily detected and avoided. The cleaning robot 100 mounted with a multi-channel LiDAR according to the exemplary embodiment of the present invention obtains information on obstacles lower than a position where the multi-channel LiDAR is mounted so that collision with the low obstacle and various problems caused by the collision may be avoided. To this end, it is very important to distinguish the floor and the obstacle in the three-dimensional map information to display the obstacle.

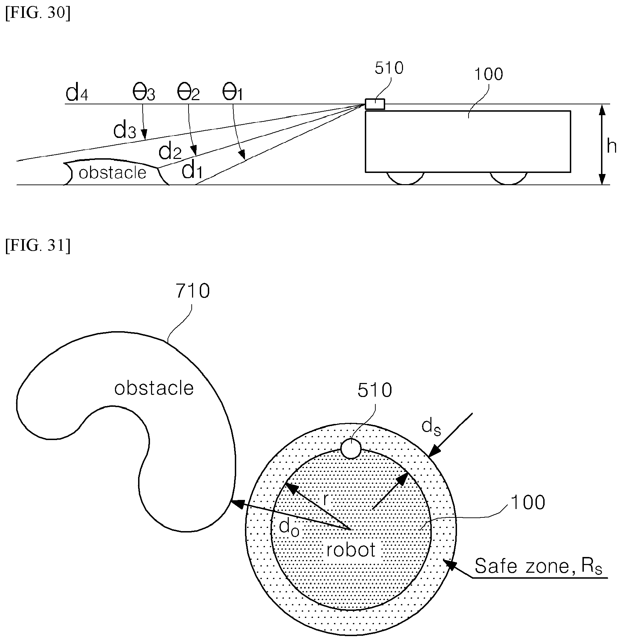

FIG. 30 illustrates a process of detecting a floor to sense low obstacle information by a multi-channel LiDAR mounted in a cleaning robot to which an exemplary embodiment of the present disclosure is applied.

As illustrated in FIG. 30, according to downward direction information of the cleaning robot measured from the multi-channel LiDAR mounted in the cleaning robot, if a distance from the sensor to the floor is $d_n = h/\cos(\theta_n)$ (here, n = 1, 2, 3), it is estimated as a floor. If not, it is displayed as an obstacle rather than the floor. This may be represented using a projective map as follows in step S640.

Referring to FIGS. 27 and 28, for example, when a position of the multi-channel LiDAR sensor is 3, the low obstacles may be represented by a number smaller than 0x80 (10000000). Further, like the normal cleaning robots, all obstacles which are not low may be represented in the projective map by a value which is equal to or larger than 0x80.

Two information is combined to obtain the obstacle information and the cleaning robot may plan a collision avoidance path in advance before encountering the obstacle in step S650.

To be more specific, an optimal collision avoidance path generating algorithm which ensures the safety of the cleaning robot and the maximum cleaning area will be described.

As described above, all obstacle information including low obstacles is represented in the projective map so that it is possible to plan a path which may avoid the collision before encountering the collision with the obstacle based on the obstacle information. Unlike the mobile robots of the related art which generates a path avoiding the collision by connecting the farthest points from the obstacle, the cleaning robot thoroughly cleans the areas as many as possible so that the cleaning robot needs to be closely attached to the obstacle while avoiding the collision with the obstacle.

FIG. 31 illustrates a relationship of a cleaning robot and an obstacle when a cleaning robot to which an exemplary embodiment of the present invention is applied performs the cleaning.

As illustrated in FIG. 31, all the obstacles need to be located outside a safe zone of the cleaning robot. However, when the path is generated such that the closest distance $d_0$ from the cleaning robot to the obstacle is minimized, the largest area may be cleaned as much as possible. Referring to FIG. 31, an optimal path is reduced to an optimization problem of Equation 1.

$$[\text{Equation 1}]$$

$$\text{minimize } d_o$$

$$\text{subject to } d_o > r + d_s$$

The movement path of the cleaning robot needs to be determined while satisfying the optimization problem of Equation 1. To this end, the optimization problem of Equation 1 may be applied to a path planning algorithm of the mobile robot of the related art. Specifically, in the present invention, RRT (rapid random tree) and Potential field (for reference, is similar to a wavefront method) techniques are considered.

First, in the case of RRT, a roadmap which is a set of various paths where the cleaning robot may move is generated and the optimization problem of Equation 1 is applied to select an optimal path among the paths.

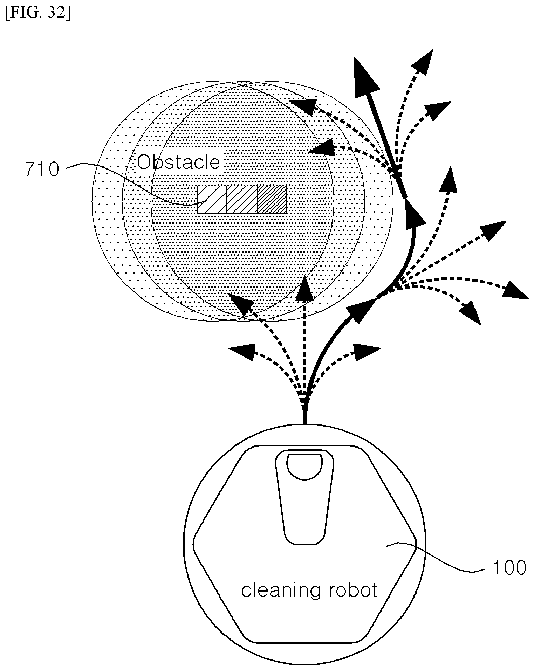

FIG. 32 illustrates a process of selecting an optimal path from RRT to which an optimization problem of Equation 1 is applied.

In FIG. 32, the dotted line represents all paths where the cleaning robot may move and the solid line is a movement path of the cleaning robot which is selected from all available paths through the optimization problem of Equation 1.

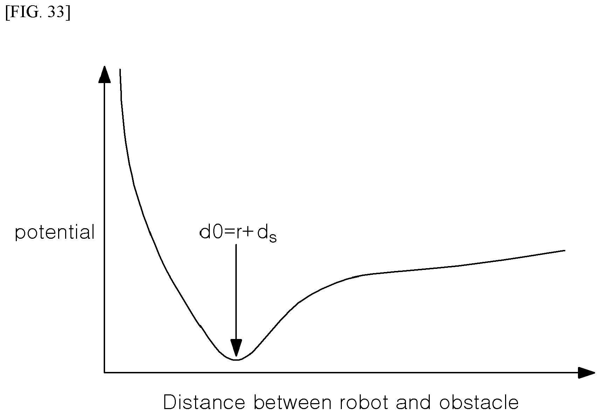

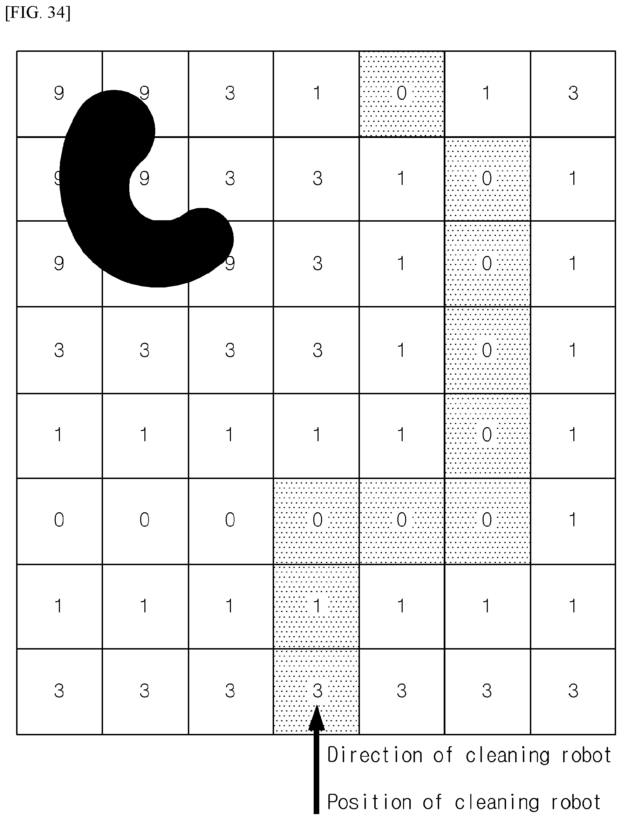

FIGS. 33 and 34 illustrate a potential-field based path generating process through an optimization problem of Equation 1.

When a potential field is applied, a potential as illustrated in FIG. 33 may be assigned in accordance with a distance between the obstacle and the cleaning robot.

As illustrated in FIG. 33, when the optimization problem of Equation 1 is applied to the potential field, when $d_0$ is $r + d_s$, the potential may be minimized. Therefore, a path as illustrated in FIG. 34 may be obtained.

In the disclosure of the present invention, a cleaning robot which may obtain three-dimensional environment information by mounting a multi-channel LiDAR is introduced and cleaning driving algorithms are proposed. First, a projective map is proposed so that three-dimensional space information which requires a large storage space and computational ability may be applied to the two-dimensional grid map of the related without information loss. Further, existing methods are easily applied to three-dimensional information using the projective map to extract wall information and distinguish the obstacle. Further, a coverage path which maximizes the cleaning area based on the wall and obstacle information and avoids the collision with the obstacle is planned.

The method of detecting an obstacle according to the exemplary embodiment of the present invention as described above may be implemented by a computer readable software and the software may be executed in a processer mounted in an autonomous cleaning robot.

Next, a mobile robot using a TOF based sensor will be described.

In the related art, the following methods have been applied to sense the slip generated in the mobile robot which cleans.

First, a rotation speed of the mobile robot which is estimated from encoders of both wheels and gyro information of the mobile robot are compared to detect the slip of the mobile robot. Further, an additional passive encoder is mounted in the mobile robot to detect the movement of the mobile robot and speed information of the mobile robot obtained from the encoders of both wheels of the mobile robot is compared to determine whether the mobile robot actually moves or is restraint.

However, there are inconvenience that the rotation of the passive encoder varies depending on the floor state and inaccurate information is provided from an area having many unevenness and an environment having a height difference of a driving surface such as a carpet.

As another method, as a system which senses the motion of the mobile robot by a method of an optical mouse of a computer, an infrared or laser emitting and receiving device is attached on the bottom to sense the flow of the light receiving information and detect the movement of the mobile robot. The information is compared with the encoder information of the wheels to detect the slip or restraint situation. Good performance may be achieved in an even floor environment, but it is very sensitive to a reflectance of the floor.

An object of the present invention is to match at least one obstacle information through the mobile robot using a TOF based sensor to figure out a relative position difference of the mobile robot and detect how much the mobile robot slides therethrough.

Further, another object of the present invention is to detect a material of the floor of the area where the mobile robot drives and distinguish the undulating state of the floor, and detect an obstacle having a low height.

The mobile robot using a TOF based sensor according to the exemplary embodiment of the present invention may include a sensor unit including at least one 3D LiDAR which collects three-dimensional point cloud information on the floor of an area where the driving and cleaning operation is performed and at least one time of flight (TOF) camera, a storing unit which stores information on the area where the driving and cleaning operation is performed collected from the sensor, and a control unit which controls the driving and cleaning operation using information which is stored in advance in the storing unit and information collected from the sensor unit at the present time. The information may be the material of the floor, the undulating state of the floor, and the obstacle located on the floor.

The following effects may be obtained by the mobile robot using the TOF based sensor of the present invention.

First, it is possible to figure out a relative position difference and detect how much the mobile robots slips therethrough.

Second, it is possible to detect the material of the floor of the area where the mobile robot is driven, distinguish an undulating state of the floor, and detect the obstacle having a low height.

The mobile robot using the TOF based sensor of the present invention which will be described below is a cleaning robot which performs a driving and cleaning operation.

The mobile robot using the TOF based sensor according to the exemplary embodiment of the present invention may include a LIDAR or a TOF camera.

The mobile robot of the present invention may be implemented by applying an algorithm which separates a floor portion in accordance with an area where the mobile robot is driven, from the three-dimensional point cloud information obtained from the 3D LIDAR or the TOF camera to distinguish the material (a tile, a wooden floor, or a carpet) of the floor and distinguish the undulating state (cliff, door sill, or ramp) of the floor, and distinguish obstacles (clothes, animal excrements, and blocks).

Hereinafter, a process of obtaining, distinguishing, and determining a current state of the driving surface using three-dimensional environment information will be described in detail.

Since the material characteristic of the floor is one of the most influential factors in the driving and cleaning performance of the mobile robot, it is very important to analyze and distinguish the material of the floor. After separating the floor portion from three-dimensional point cloud information, a material of the floor where the mobile robot currently operates is detected.

The floor where the mobile robot performs the cleaning operation is classified into a tile, a wooden floor, a linoleum, and a carpet which have material characteristics, respectively, so that the characteristics of the material are classified based on the position and the intensity information included in the point cloud and the material of the floor of the driving environment may be distinguished during the driving of the mobile robot using the material characteristics.

FIGS. 1 to 3 are views illustrating point cloud information in accordance with the undulation of the floor on which the mobile robot according to the exemplary embodiment of the present invention is driven.

Referring to FIGS. 1 to 3, FIG. 1 is point cloud information on a door sill, FIG. 2 is point cloud information on a ramp, and FIG. 3 is point cloud information on a cliff. To be more specific, the mobile robot of the present invention uses the floor information obtained from the point cloud information to figure out the undulation change of the floor on which the mobile robot is driven to improve the safe driving and cleaning performance.

FIG. 6 is a view illustrating point cloud information on a low obstacle according to an exemplary embodiment of the present invention.

Generally, one of factors which interrupt a course and the cleaning of the cleaning robot in a normal home environment is obstacles which is lower than an obstacle sensing sensor. The mobile robot of the present invention senses the low obstacles in advance to avoid the obstacles to guarantee the safe driving and high cleaning performance of the mobile robot. To be more specific, when the mobile robot of the present invention uses the floor information obtained from the point cloud information, it is possible to detect the low obstacles scattered on the floor and thus the avoidance driving and cleaning are possible. When it is possible to cope with the low obstacles, the cleaning success r ate and the coverage performance of the mobile robot may be improved.

FIG. 12 is a view illustrating a dust inflow amount detecting system using a TOF based flow detector according to an exemplary embodiment of the present invention.

Referring to FIG. 12, when the TOF based flow detector is applied, a dust inflow amount is measured. As another example, when a dust inflow amount detecting system using the TOF based flow detector as illustrated in FIG. 12 is used, as compared with an example which uses an optical element, it may be less sensitive to the dust attached on the glass (window).

FIG. 4 is a view illustrating a mobile robot using a two-channel TOF distance measuring sensor according to an exemplary embodiment of the present invention.

When the TOF based 360 degree-distance measuring device is applied in two channels of a direction horizontal to the ground and a direction diagonal to the ground not only to detect the obstacle and estimate the position, but also to estimate the floor state and detect the door sill or the carpet.

FIG. 5 is a view illustrating a mobile robot using a multi-channel TOF distance measuring sensor according to an exemplary embodiment of the present invention. As illustrated in FIG. 5, the TOF based 360-degree distance measuring device is configured in a plurality of channels to be applied to the mobile robot.

FIGS. 7 to 11 are views for explaining a method of finding out the slip of the two-wheel driving mobile robot using a laser odometry according to an exemplary embodiment of the present invention.

FIG. 7 illustrates a slip situation when the mobile robot slides. As illustrated in FIG. 7, when the mobile robot slides from the point A to the point B, in order to figure out the movement range of the mobile robot, external information of the mobile robot which is not changed even by the motion of the mobile robot may be used. For example, to this end, information of 360-degree range finder provided by at least one channel may be used.

FIGS. 8 and 9 are views for explaining a range finder information at points A and B.

FIG. 8 illustrates distance information to an obstacle around the mobile robot measured at the point A and FIG. 9 illustrates distance information to an obstacle around the mobile robot measured at the point B.

When the obstacle information sensed in FIGS. 8 and 9 moves or rotates to match each other, a movement amount of two points (the point A and the point B) may be known. In order to match two obstacle information, a particle filter of FIG. 10 may be applied.

FIG. 10 illustrates a process of matching obstacle information obtained at the point B with respect to the point A. Particles (arrows) illustrated in FIG. 10 are arbitrarily generated candidate locations (a location, a posture, and an angle). When the location of B is assumed as each particle (arrow) and the obstacle information matches, a particle which is the most similar to the obstacle information actually measured in the position B is found and the location and the posture information of the particle may be deduced as a new position B of the mobile robot.

FIG. 11 illustrates finally matched obstacle information. Referring to FIG. 11, the obstacle information matches each other to be disposed in the same position, a relative position difference of the mobile robots is figured out and thus a movement range of the mobile robot may be detected. Further, the information is divided by the measured time difference, a current speed of the mobile robot may be calculated. As another example, when the number of particles (arrows) is increased and a random error component is considered, more accurate information may be predicted.

To be more specific, as illustrated in FIG. 7, the robot slips from the point A to the point B, the information obtained from the TOF 360 degree distance measuring device is compared to calculate a movement range of the mobile robot. FIGS. 8 and 9 are environment information measured by the robot located in the points A and B. As illustrated in FIG. 10, the obstacle information of FIG. 9 is rotated around the position A to seek a point where the obstacles match. The point sought as described above is a new position where the robot slips to move and thus the movement range of the mobile robot, that is, a slip range may be detected.

FIGS. 13 and 14 are views illustrating a docking guiding system using the TOF based 360 degree distance measuring device according to an exemplary embodiment of the present invention. FIG. 13 illustrates a docking situation and FIG. 14 illustrates an intensity graph of laser measured by a laser receiving unit.

The mobile robot equipped with the TOF based 360 degree distance measuring device according to the exemplary embodiment of the present invention may configure the docking system as follows. The docking station is configured by a material having a high reflectance and various patterns are applied thereto. Here, as illustrated in FIG. 14, a reflectance of the docking part is high so that it is possible to find the position of the docking station. Output information of the TOF range finder is a distance so that an accurate position of the docking state is known, thereby improving the docking performance.

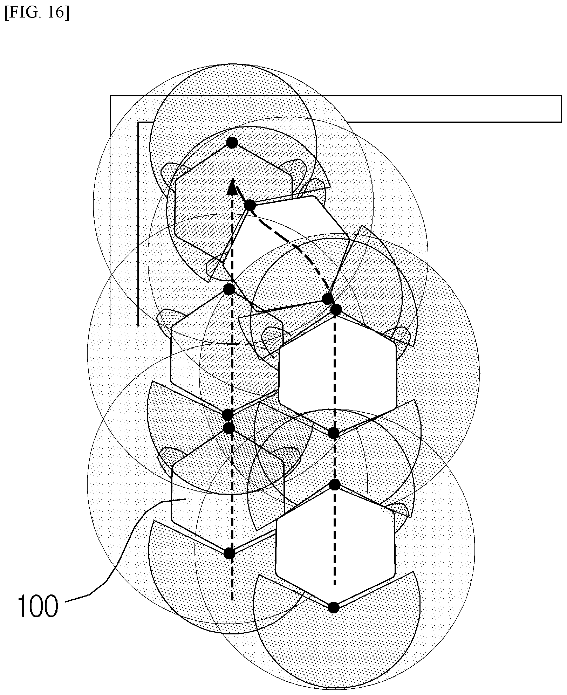

FIGS. 15 and 16 are views illustrating a cleaning operation using forward and backward movement of the robot according to an exemplary embodiment of the present invention.

The mobile robot using the TOF based sensor according to the exemplary embodiment of the present invention is mounted with the 360 degree range finder to freely move backwardly. FIG. 15 is a view illustrating an operation of a mobile robot of the related art which cannot move backwardly to switch the direction at 180 degrees for backward movement and FIG. 16 is a view illustrating an operation of the backward movement of the mobile robot of the present invention which directly moves backwardly without switching the direction at 180 degrees. As described above, the backward movement is possible without switching the direction so that a time to perform the entire cleaning operation may be shortened.

FIG. 17 is a view schematically illustrating an operation of an intensive cleaning operation of the mobile robot according to an exemplary embodiment of the present invention in a place with a lot of dusts.

Referring to FIG. 17, the mobile robot of the present invention may directly move backwardly in the place with a lot of dust without switching the body part so that the mobile robot moves back and forth to clean the area and sufficiently removes the dust.

In this case, the mobile robot cleans the area without rotating and cleaning brushes and mobs provided in a part of the mobile robot are used at both direction so that the position estimating performance is maintained and the slip which is frequently generated during the rotation may be reduced.

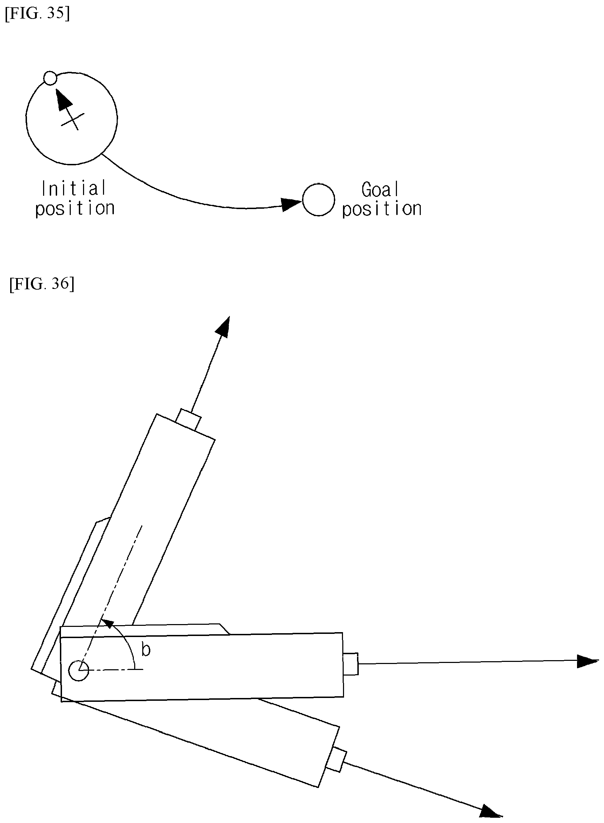

FIG. 35 is a view for explaining a movement range of a mobile robot which performs a backward operation according to an exemplary embodiment of the present invention.

The mobile robot of the related art only goes straight, but the mobile robot of the present invention shows a position control ability including backward movement as illustrated in FIG. 35. As described above, the backward movement is possible so that a control performance is improved and an obstacle avoidance and narrow area escape performance may be improved.

The mobile robot according to another exemplary embodiment of the present invention inserts a water tank in the body so that the mop provided in a part of the body is not dried and the moisture is consistently supplied to the mop.

A mobile robot according to another example of the present invention also performs steam cleaning.

FIG. 36 is a view for explaining a leash guider of a mobile robot according to an exemplary embodiment of the present invention.

A leash guider is a device which senses a length of a pulled leash and a pulled left and right direction. However, the leash guide of the mobile robot of the related art cannot sense the pulling of the leash in a vertical direction so that when the user pulls the leash upwardly or downwardly in the vertical direction, the robot which uses the leash guider operates to collide with the user or cause erroneous operation.

In contrast, referring to FIG. 36 which illustrates the leash guider of the mobile robot of the present invention, a rotary sensor is mounted at a side of the leash guider and a holder of the leash guider is attached thereto. Therefore, the leash is pulled up and down, an amount of the leash moving up and down is reduced and the leash guider naturally moves to measure a tilting angle.

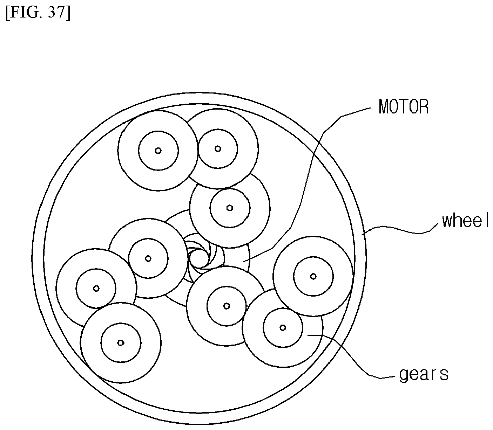

FIG. 37 is a view illustrating a mobile root in which inwheel motor according to an exemplary embodiment of the present invention is provided.

A mobile robot of the related art has a structure which provides a motor box to insert gears in a wheel bar. In contrast, the mobile robot of the present invention, as illustrated in FIG. 37, has a structure provided with an inwheel motor.

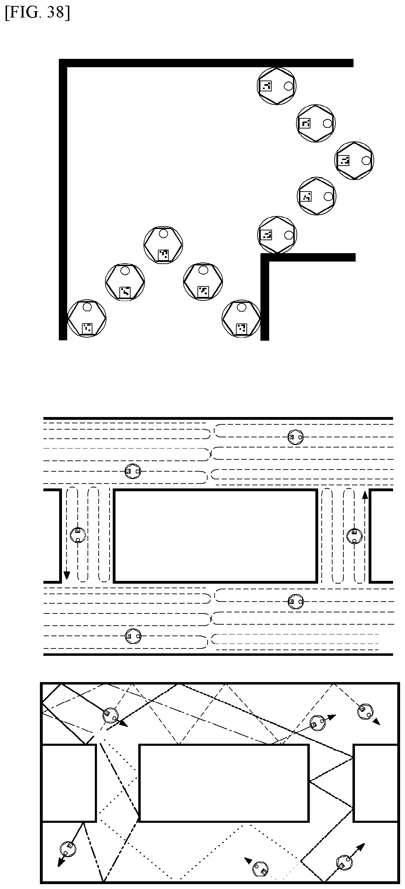

FIG. 38 is a view for explaining an operation of a mobile robot which cleans a broad space such as a building by applying a plurality of small mobile robots according to an exemplary embodiment of the present invention.

A building cleaning robot of the related art is very large and expensive but a cleaning speed thereof is low and maintenance is not easy. Therefore, the mobile robot according to an example of the present invention applies a plurality of cleaning robots having a size of a home cleaning robot to clean a wider area.

Information (current, an impulse, or posture information) on every operation which performs in accordance with the case when the mobile robot according to an exemplary embodiment of the present invention climbs an inclination, a door sill, or a carpet is obtained to apply a learning technique to distinguish whether the mobile robot moves the inclination or the door sill.

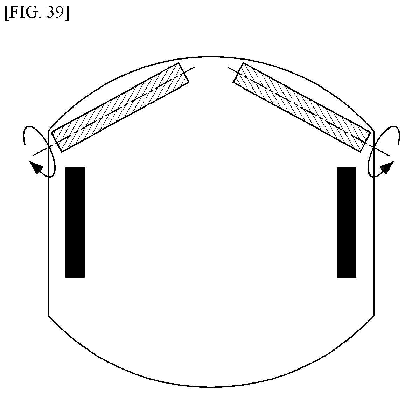

FIG. 39 is a view illustrating a brush wheel of a mobile robot according to an exemplary embodiment of the present invention.

The mobile robot of the related art uses side brushes. In contrast, the mobile robot of the present invention uses a brush wheel. FIG. 39 illustrates a mobile robot of the present invention which uses a brush wheel.

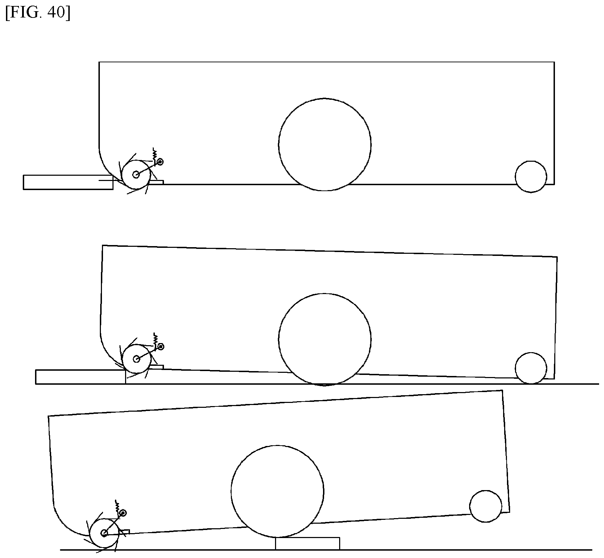

FIG. 40 is a view illustrating to explain operations performed by using a brush wheel according to an exemplary embodiment of the present invention.

Referring to FIG. 40, a cylindrical brush wheel at a front end of the mobile robot serves as a wheel to allow the mobile robot to easily clime the door sill or the carpet.

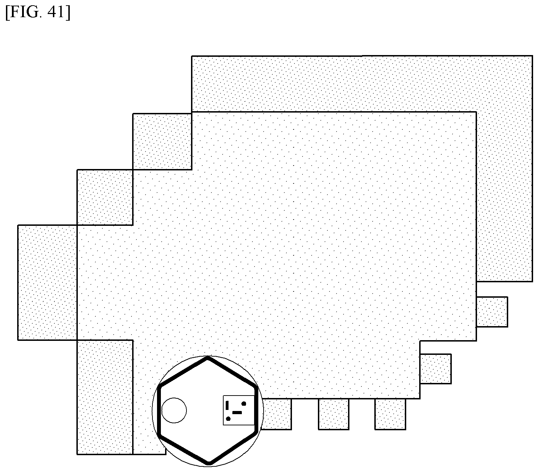

FIG. 41 is a view for explaining a screen displayed on a display unit of a mobile robot according to an exemplary embodiment of the present invention.

The mobile robot of the present invention may further include a display unit. In this case, the user may implement a map representing a driving area of the mobile robot as illustrated in FIG. 41 to visually identify the area where the cleaning is performed by the mobile robot through the display unit.

For example, a map including both an area where the cleaning operation of the mobile robot is performed by the user and an area which will be cleaned may be applied like a game character to be displayed.

The exemplary embodiment of the present invention has been described above with reference to FIGS. 1 to 41. Hereinafter, an exemplary embodiment of the present invention which may be deducted from the exemplary embodiment will be described below.

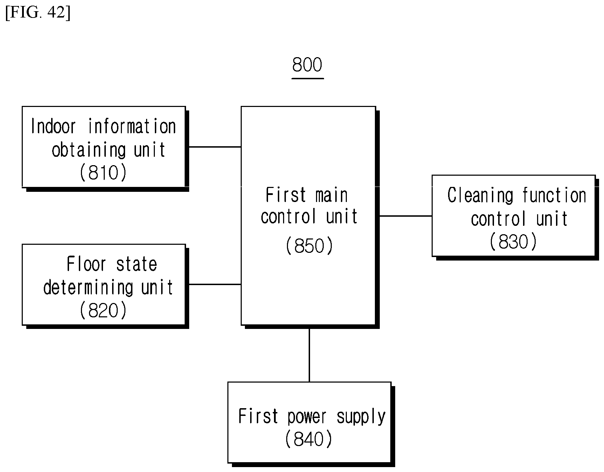

FIG. 42 is a block diagram schematically illustrating an internal configuration of a cleaning function control device according to an exemplary embodiment of the present invention.

Referring to FIG. 42, a cleaning function control device 800 includes an indoor information obtaining unit 810, a floor state determining unit 820, a cleaning function control unit 830, a first power supply 840, and a first main control unit 850.

The first power supply 840 supplies power to individual components which configures the cleaning function control device 800.

The first main control unit 850 controls an overall operation of each configuration which configures the cleaning function control device 800.

The indoor information obtaining unit 810 performs a function of obtaining information on each point in the room as three-dimensional information.

The indoor information obtaining unit 810 uses at least one of a LiDAR sensor, a time of flight (TOF) sensor, and a rotatable laser range finder to obtain information on each point in the room as three-dimensional information.

The indoor information obtaining unit 810 may further include a multi-channel LiDAR unit (not illustrated) and a projective map generating unit (not illustrated).

The multi-channel LiDAR unit includes at least two laser modules having different emission angles of a transmission signal to detect three-dimensional environment information including obstacle information of the cleaning robot.

The multi-channel LiDAR unit is located in a front upper portion of the movement direction of the cleaning robot and at least two laser modules may be mounted to have different emission angles of a transmission signal in a downward or horizontal direction.

The projective map generating unit generates three-dimensional environment information for three-dimensionally defining an obstacle based on reception information of at least two laser modules and generates a projective map including three-dimensional environment information in a two-dimensional space map.

The projective map generating unit analyzes a reception signal of the multi-channel LiDAR unit to generate shape information of an obstacle including a door sill, a ramp, and a cliff.

The projective map generating unit including a three-dimensional environment information generating unit which represents three-dimensional environment information using a regular hexahedron of $n^3$ and determines a marking grid position and a grid marking value using horizontal position information and vertical position information of an obstacle obtained from the multi-channel LiDAR unit.

The projective map generating unit performs Hough transform on a binary projective map obtained by changing a projective map including height information into binary information of 1 or 0 to extract a linear area.

The projective map generating unit assigns a higher priority to an area which is not cleaned by comparing with a cleaning map and assigns a higher priority to a straight line which is close.

The bottom state determining unit 820 determines a state of the floor based on information on first points related to the floor of an indoor space. When information on each point of the indoor space is obtained by the indoor information obtaining unit 810, the floor state determining unit 820 extracts information on points related to the floor of the indoor space from the information to perform the above-described function.

The floor state determining unit 820 collects the information on the first points to generate information related to an undulation change of the floor and determines the state of the floor based on the information related to the undulation change of the floor.

Further, the floor state determining unit 820 may determine any one of a door sill, a ramp, and a cliff as a state of the floor, based on the information related to the undulation change of the floor.

The cleaning function control unit 830 performs a function of controlling a cleaning function of the indoor space based on the state of the floor determined by the floor state determining unit 820.

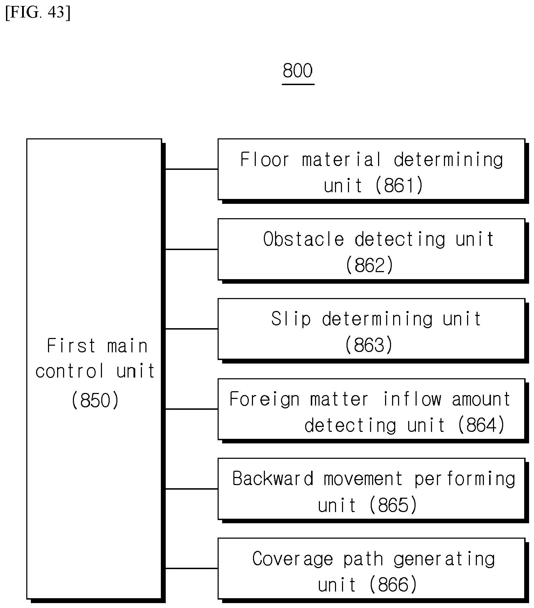

FIG. 43 is a block diagram listing configurations which will be added into the cleaning function control device 800 illustrated in FIG. 42.

The cleaning function control device 800 may further include a floor material determining unit 861.

The floor determining unit 861 determines a material of the floor based on information on first points. When the cleaning function control device 800 further includes the floor material determining unit 861, the cleaning function control unit 830 may control the cleaning function of the indoor space based on a state of the floor and a material of the floor.

The cleaning function control device 800 may further include an obstacle detecting unit 862.

The obstacle detecting unit 862 performs a function of detecting an obstacle located indoor based on the information on the first points and/or second points related to the indoor space. When the cleaning function control device 800 further includes the obstacle detecting unit 862, the cleaning function control unit 830 may control the cleaning function of the indoor space based on a state of the floor and information on the obstacle.

In the meantime, when the cleaning function control device 800 further includes an obstacle detecting unit 862, the indoor information obtaining unit 810 may obtain information on the first points and information on the second points with information on each point of the indoor space. Specifically, the indoor information obtaining unit 810 may obtain information on the first points using at least one channel signal related to a low beam. Further, the indoor information obtaining unit 810 may obtain information on the second points using at least one channel signal related to a high beam.

The cleaning function control device 800 may further include a slip determining unit 863.

The slip determining unit 863 performs a function of determining whether a device (for example, a cleaning robot) which performs a cleaning function slips based on distances to the obstacle obtained from different points. When the cleaning function control device 800 further includes the slip determining unit 863, the cleaning function control unit 830 may control the cleaning function of the indoor space based on the state of the floor and whether the device which performs the cleaning function slips.

The slip determining unit 863 may specifically distinguish and perform the above-described functions.

First, the slip determining unit 863 estimates an arrangement pattern of the obstacle based on distances to an obstacle from a third point which is one of different points.

Next, the slip determining unit 863 estimates an arrangement pattern of the obstacle based on distances to an obstacle from a fourth point which is another one of different points.

Next, the slip determining unit 863 matches the arrangement pattern of the obstacle estimated at a third point with the arrangement pattern of the obstacle estimated at the fourth point to determine whether a device which performs a cleaning function slips.

When the arrangement of the obstacle estimated at the third point and the arrangement pattern of the obstacle estimated at the fourth point match, the slip determining unit 863 may use particles located within a predetermined range with respect to the third point or the fourth point.

The slip determining unit 863 may determine whether a device which performs the cleaning operation slips based on information of particles which contribute to matching the arrangement pattern of the obstacle estimated at the third point and the arrangement pattern of the obstacle estimated at the fourth point.

The cleaning function control device 800 may further include a foreign matter inflow amount detecting unit 864.

The foreign matter inflow amount detecting unit 864 performs a function of detecting an inflow amount of an foreign material using a flow sensor attached to an inlet of the device which performs the cleaning function. When the cleaning function control device 800 further includes the foreign matter inflow amount detecting unit 864, the cleaning function control unit 830 may control the cleaning function of the indoor space based on the state of the floor and an inflow amount of the foreign matter.

The cleaning function control device 800 may further include a backward movement performing unit 865.

The backward movement performing unit 865 performs the backward movement using a rotatable sensor. When the cleaning function control device 800 further includes the backward movement performing unit 865, the cleaning function control unit 830 may control the cleaning function of the indoor space based on a state of the floor and a backward movement.

The cleaning function control device 800 may further include a coverage path generating unit 866.

The coverage path generating unit 866 performs a function of determining a position of the obstacle on the space based on the projective map and generating a coverage path to avoid the obstacle.

The coverage path generating unit 866 may estimate presence of an obstacle based on a vertical distance from at least two laser modules to the floor and a lower horizontal emission angle of the transmission signal of the laser modules.

The coverage path generating unit 866 may determine the size and the shape of the obstacle when the position of the obstacle on the space is determined and accesses at a shortest distance without causing the collision with the obstacle to generate a coverage path to avoid the obstacle.

Next, an operating method of the cleaning function control device 800 will be described.

First, the indoor information obtaining unit 810 obtains information on each point in the room as three-dimensional information (STEP A).

Next, the floor state determining unit 820 determines a state of the floor based on information on first points related to the floor of the indoor (STEP B).

Next, the function cleaning control unit 830 controls the cleaning function of the indoor space based on the state of the floor (STEP C).

In the meantime, between STEP B and STEP C, the floor material determining unit 861 determines the material of the floor based on the information on first points. The cleaning function control unit 830 controls the cleaning function for the indoor space, based on the state of the floor and the material of the floor in STEP C.

In the meantime, between STEP B and STEP C, the obstacle detecting unit 862 detects an obstacle located indoor based on the information on the first points and/or second points related to the indoor space. By doing this, the cleaning function control unit 830 controls the cleaning function for the indoor space, based on the state of the floor and information on the obstacle in STEP C.

In the meantime, between STEP B and STEP C, the slip determining unit 863 may determine whether the device which performs the cleaning function slips, based on the distances to the obstacle obtained at different points. By doing this, the cleaning function control unit 830 controls the cleaning function for the indoor space, based on the state of the floor and whether the device which performs the cleaning function slips in STEP C.

In the meantime, between STEP B and STEP C, the foreign matter inflow amount detecting unit 864 may detect the inflow amount of foreign matter using a flow sensor attached to the inlet of the device which performs the cleaning function. By doing this, the cleaning function control unit 830 controls the cleaning function for the indoor space, based on the state of the floor and the inflow amount of the foreign matter in STEP C.

In the meantime, between STEP B and STEP C, the backward movement performing unit 865 may perform backward movement using a rotatable sensor. By doing this, the cleaning function control unit 830 controls the cleaning function for the indoor space, based on the state of the floor and the inflow amount of the foreign matter in STEP C.

By doing this, between STEP B and STEP C, the coverage path generating unit 866 determines a position of the obstacle on the space based on the projective map and generates a coverage path to avoid the obstacle. By doing this, the cleaning function control unit 830 controls the cleaning function for the indoor space, based on the coverage path in STEP C.

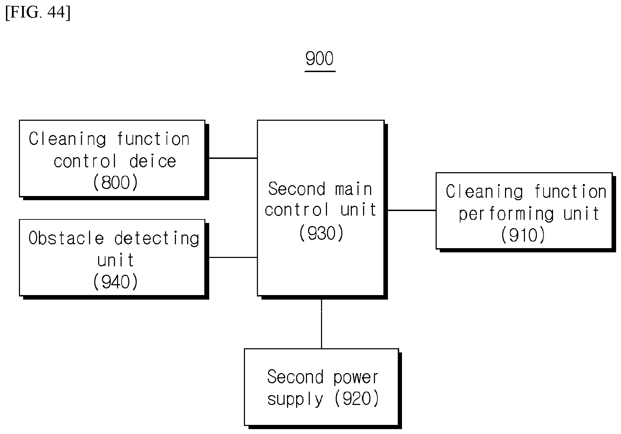

FIG. 44 is a block diagram schematically illustrating an internal configuration of a cleaning robot according to an exemplary embodiment of the present invention.

Referring to FIG. 44, the cleaning robot 900 includes a cleaning function control device 800, a cleaning function performing unit 910, a second power supply 920, and a second main control unit 930.

The cleaning function control device 800 has been described with reference to FIGS. 42 and 43, so that detailed description will be omitted.

The second power supply 920 performs a function of supplying power to each component which configures the cleaning robot 900.

The second main control unit 930 performs a function of controlling an overall operation of each component which configures the cleaning robot 900.

The cleaning function performing unit 910 performs a cleaning function of an indoor space.

In the meantime, the cleaning robot 900 may further include an obstacle detecting device 940. However, the present invention is not limited thereto and the obstacle detecting device 940 may be further included instead of the cleaning function control device 800.

The obstacle detecting device 940 is a multi-channel LiDAR based device and includes a multi-channel LiDAR unit, a projective map generating unit, and a coverage path generating unit 866. The multi-channel LiDAR unit, the projective map generating unit, and the coverage path generating unit 866 have been described with reference to FIGS. 42 and 43 so that a detailed description thereof will be omitted.

In the meantime, in the present invention, separately from the cleaning robot 900, the obstacle detecting device 940 may be independently configured.

Next, an operating method of the obstacle detecting device 940 will be described.

The multi-channel LiDAR unit of the obstacle detecting device 940 obtains three-dimensional environment information around the cleaning robot using at least two laser modules having different emission angles of a transmission signal.

Next, the projective map generating unit of the obstacle detecting device 940 generates three-dimensional environment information for three-dimensionally defining the obstacle based on the reception information of the laser modules and generates a projective map including three-dimensional environment information in a two-dimensional space map.

Next, the coverage path generating unit of the obstacle detecting device 940 extracts a two-dimensional information based wall extracting algorithm using a projective map and detects low obstacle information using the three-dimensional environment information obtained by at least two laser modules.

Even though it has been described above that all components of the exemplary embodiment of the present invention are combined as one component or operate to be combined, the present invention is not limited to the exemplary embodiment. In other words, one or more components may be selectively combined to be operated within a scope of the present invention. Further, all components may be implemented as one independent hardware but a part or all of the components are selectively combined to be implemented as a computer program which includes a program module which performs a part or all functions combined in one or plural hardwares. Further, such a computer program may be stored in a computer readable media such as a USB memory, a CD disk, or a flash memory to be read and executed by a computer to implement the exemplary embodiment of the present invention. The recording media of the computer program may include a magnetic recording medium or an optical recording medium.

If it is not contrarily defined in the detained description, all terms used herein including technological or scientific terms have the same meaning as those generally understood by a person with ordinary skill in the art. A generally used terminology which is defined in a dictionary may be interpreted to be equal to a contextual meaning of the related technology but is not interpreted to have an ideal or excessively formal meaning, if it is not apparently defined in the present invention.

The above description illustrates a technical spirit of the present invention as an example and various changes, modifications, and substitutions become apparent to those skilled in the art within a scope of an essential characteristic of the present invention. Therefore, as is evident from the foregoing description, the exemplary embodiments and accompanying drawings disclosed in the present invention do not limit the technical spirit of the present invention and the scope of the technical spirit is not limited by the exemplary embodiments and accompanying drawings. The protection scope of the present invention should be interpreted based on the following appended claims and it should be appreciated that all technical spirits included within a range equivalent thereto are included in the scope of the present invention.

The present invention is applicable to a cleaning robot which performs a cleaning function.

**Claims**

1. A cleaning function control device (800) for controlling a cleaning function of a cleaning robot (100), comprising:

    an indoor information obtaining unit (810) which obtains information on each point of an indoor space as three-dimensional information;
    an obstacle detecting unit (862) which detects an obstacle located indoor based on the information on first points and second points related to the indoor space;
    a slip determining unit (863) which determines whether the cleaning robot (100) slips based on distances to the obstacles obtained at different points;
    a cleaning function control unit (830) which controls a cleaning function of the indoor space,
    **characterized in that**:

    the indoor information obtaining unit (810) includes a rotating multi-channel LiDAR unit (510) including at least two laser modules (511, 512) having different emission angles of a transmission signal,
    wherein the two laser modules (511, 512) are configured to detect three-dimensional environment information including obstacle information of the cleaning robot (100); and
    wherein the cleaning function control unit (830) controls the cleaning function of the indoor space based on the information on the detected obstacle and whether the cleaning robot (100) slips.

2. The cleaning function control device (800) of claim 1, further comprising a floor state determining unit (820) which determines a state of the floor based on information on the first points related to the floor of the indoor space;

    wherein the cleaning function control unit (830) controls a cleaning function of the indoor space based on further the state of the floor, and
    wherein the indoor information obtaining unit (810) uses at least one of a LiDAR sensor, a time of flight (TOF) sensor, and a rotatable laser range finder to obtain information on each point in the indoor space as three-dimensional information.

3. The cleaning function control device (800) of claim 2, wherein the floor state determining unit (820) collects the information on the first points to generate information related to an undulation change of the floor and determines the state of the floor based on the information related to the undulation change of the floor.

4. The cleaning function control device (800) of claim 2, further comprising:

    a floor material determining unit (861) which determines a material of the floor based on the information on the first points,
    wherein the cleaning function control unit (830) controls a cleaning function for the indoor space based on the state of the floor and the material of the floor.

5. The cleaning function control device (800) of claim 1,
wherein the slip determining unit (863) estimates an arrangement pattern of the obstacle based on distances to the obstacle from a third point which is any one of different points, estimates an arrangement pattern of the obstacle based on distances to an obstacle from a fourth point which is another one of different points, and matches the arrangement pattern of the obstacle estimated at the third point with the arrangement pattern of the obstacle estimated at the fourth point to determine whether the cleaning robot (100) which performs a cleaning function slips.

6. The cleaning function control device (800) of claim 1, further comprising:

a foreign matter inflow amount detecting unit (864) which detects an inflow amount of a foreign matter using a flow sensor attached to an inlet of the cleaning robot (100) which performs the cleaning function,
wherein the cleaning function control unit (830) controls the cleaning function for the indoor space based on the state of the floor and the inflow amount of the foreign matter.

7. The cleaning function control device of claim 1,
wherein the rotating multi-channel unit (510) comprises a projective map generating unit (520) which generates three-dimensional environment information for three-dimensionally defining an obstacle based on reception information of at least two laser modules (511, 512) and generates a projective map including three-dimensional environment information in a two-dimensional space map.

8. The cleaning function control device (800) of claim 7, wherein the projective map generating unit (520) generates shape information of an obstacle including a door sill, a ramp, and a cliff by analyzing a reception signal of the multi-channel LiDAR unit.

9. The cleaning function control device (800) of claim 7, wherein the projective map generating unit (520) includes: a three-dimensional environment information generating unit (522) which represents the three-dimensional environment information using a regular hexahedron of $n^3$ and determines a marking grid position and a grid marking value using horizontal position information and vertical position information of an obstacle obtained by the multi-channel LiDAR unit.

10. The cleaning function control device (800) of claim 7, wherein the projective map generating unit (520) assigns a higher priority to an area which is not cleaned by comparing with a cleaning map and assigns a higher priority to a straight line which is close.

11. The cleaning function control device (800) of claim 9, further comprising:
a coverage path generating unit (530) which determines a position of the obstacle on the space based on the projective map and generate a coverage path to avoid the obstacle.

12. The cleaning function control device (800) of claim 11, wherein the coverage path generating unit (830) estimates the presence of the obstacle based on a vertical distance from each laser module to the floor and a downward horizontal emission angle of the transmission signal of the laser modules (511, 512),
wherein when the position of the obstacle on the space is determined, the coverage path generating unit (830) also determines a size and a shape of the obstacle and generates a coverage path to access the obstacle at a shortest distance without colliding with the obstacle to avoid the obstacle.

13. A cleaning robot (100), comprising a cleaning function control device (800) according to any one of claims 1 to 12.

[FIG. 1]

[FIG. 2]

[FIG. 3]

[FIG. 4]

Detected Obstacle

[FIG. 5]

[FIG. 6]

150    100

[FIG. 7]

310    320

B

A    Slip direction

[FIG. 8]

[FIG. 9]

[FIG. 10]

370

360

[FIG. 11]

[FIG. 12]

410

inflow

Wave from sensor

430

420

[FIG. 13]

Obstacle

100

450

440

[FIG. 14]

[FIG. 15]

100

[FIG. 16]

100

[FIG. 17]

[FIG. 18]

500

510

520

530

| Laser module 1 (511) |
| Laser module 2 (512) |
⋮

| Grid map generating unit (521) |
| Three-dimensional environment information generating unit (522) |
⋮

Coverage path generating unit

550

Mobile robot control unit

[FIG. 19]

```
                    ┌─────────────┐
                    │    Start    │
                    └──────┬──────┘
                           │
                           ▼
┌────────────────────────────────────────────────┐
│  Obtain three-dimensional environment information│─── S610
│   around mobile robot using multi-channel LiDAR  │
└────────────────────────┬───────────────────────┘
                         │
                         ▼
┌────────────────────────────────────────────────┐
│        Generate projective map by including      │
│    three-dimensional environment information to  │─── S620
│             two-dimensional grid map             │
└────────────────────────┬───────────────────────┘
                         │
                         ▼
┌────────────────────────────────────────────────┐
│   Extract wall information using projective map by│
│  two-dimensional information based wall extracting│─── S630
│                    algorithm                      │
└────────────────────────┬───────────────────────┘
                         │
                         ▼
┌────────────────────────────────────────────────┐
│           Detect low obstacle information using   │
│      three-dimensional environment information    │─── S640
│          obtained by multi-channel LiDAR          │
└────────────────────────┬───────────────────────┘
                         │
                         ▼
┌────────────────────────────────────────────────┐
│     Generate coverage path which avoids collision │
│      and ensures maximum cleaning area using low  │─── S650
│         obstacle information and projective map   │
└────────────────────────┬───────────────────────┘
                         │
                         ▼
                    ┌─────────────┐
                    │     END     │
                    └─────────────┘
```

[FIG. 20]

| Display three-dimensional space by regular hexahedron of $n^3$ | S621 |

↓

| Determine grid position to be marked using horizontal position information of obstacle obtained by a plurality of multi-channel LiDARs | S622 |

↓

| Determine a value to be marked in grid using vertical position information of obstacle obtained by a plurality of multi-channel LiDARs | S623 |

[FIG. 21]

| Convert projective map including undulation information into binary projective map | S631 |

↓

| Perform Hough transform on binary projective map to extract linear area | S632 |

↓

| Compare binary projective map and cleaning map to assign higher priority to non-cleaned area and short distance line | S633 |

[FIG. 22]

[FIG. 23]

[FIG. 24]

| 3n~4n | 2n~3n | n~2n | 0~n | -n~0 | -2n~-n | -3n~-2n | -4n~-3n |
|---|---|---|---|---|---|---|---|

[FIG. 25]

| 7n/2~4n | 3n~7n/2 | 5n/2~3n | 2n~5n/2 | 3n/2~2n | n~3n/2 | n/2~n | 0~n/2 | -n/2~0 | -n~n/2 | -3n/2~-n | -2n~-3n/2 | -5n/2~-2n | -3n~-5n/2 | -7n/2~-3n | -4n~-n/2 |
|---|---|---|---|---|---|---|---|---|---|---|---|---|---|---|---|

[FIG. 26]

| $7n\sim8n$ | $6n\sim7n$ | $5n\sim6n$ | $4n\sim5n$ | $3n\sim4n$ | $2n\sim3n$ | $n\sim2n$ | $0\sim n$ | $-n\sim0$ | $-2n\sim-n$ | $-3n\sim-2n$ | $-4n\sim-3n$ | $-5n\sim-4n$ | $-6n\sim-5n$ | $-7n\sim-6n$ | $-8n\sim-7n$ |
|---|---|---|---|---|---|---|---|---|---|---|---|---|---|---|---|

[FIG. 27]

Grid information

Obstacle

Direction of cleaning robot

Position of cleaning robot

[FIG. 28]

| | | | |
|---|---|---|---|
| 0x00 | 0x00 | 0x00 | 0x00 |
| 0x10 | 0x30 | 0x10 | 0x00 |
| 0x00 | 0x00 | 0x00 | 0x00 |
| 0x00 | 0x00 | 0x00 | 0x00 |

↑ Position of cleaning robot

[FIG. 29]

| | | | |
|---|---|---|---|
| 0 | 0 | 0 | 0 |
| 1 | 1 | 1 | 0 |
| 0 | 0 | 0 | 0 |
| 0 | 0 | 0 | 0 |

Position of cleaning robot

[FIG. 30]

[FIG. 31]

[FIG. 32]

[FIG. 33]

Distance between robot and obstacle

[FIG. 34]

| | | | | | | |
|---|---|---|---|---|---|---|
| 9 | 9 | 3 | 1 | 0 | 1 | 3 |
| 9 | 9 | 3 | 3 | 1 | 0 | 1 |
| 9 | 9 | 3 | 1 | 0 | 1 | |
| 3 | 3 | 3 | 3 | 1 | 0 | 1 |
| 1 | 1 | 1 | 1 | 1 | 0 | 1 |
| 0 | 0 | 0 | 0 | 0 | 0 | 1 |
| 1 | 1 | 1 | 1 | 1 | 1 | 1 |
| 3 | 3 | 3 | 3 | 3 | 3 | 3 |

Direction of cleaning robot

Position of cleaning robot

[FIG. 35]

Initial
position

Goal
position

[FIG. 36]

b

[FIG. 37]

[FIG. 38]

[FIG. 39]

[FIG. 40]

[FIG. 41]

[FIG. 42]

<u>800</u>

```
┌─────────────────────┐
│ Indoor information  │
│   obtaining unit    │
│       (810)         │
└─────────────────────┘
                              ┌──────────────────┐
┌─────────────────────┐       │   First main     │      ┌──────────────────────┐
│    Floor state      │       │  control unit    │      │ Cleaning function    │
│  determining unit   │───────│     (850)        │──────│   control unit       │
│       (820)         │       │                  │      │      (830)           │
└─────────────────────┘       └──────────────────┘      └──────────────────────┘
                                      │
                              ┌──────────────────┐
                              │ First power supply│
                              │      (840)        │
                              └──────────────────┘
```

[FIG. 43]

800

First main
control unit
(850)

Floor material determining
unit (861)

Obstacle detecting unit
(862)

Slip determining unit
(863)

Foreign matter inflow amount
detecting unit (864)

Backward movement performing
unit (865)

Coverage path generating
unit (866)

[FIG. 44]

900

```
┌─────────────────────┐        ┌─────────────────┐        ┌──────────────────────┐
│ Cleaning function   │        │                 │        │                      │
│  control deice      │────────│ Second main     │        │ Cleaning function    │
│     (800)           │        │ control unit    │────────│ performing unit      │
└─────────────────────┘        │    (930)        │        │     (910)            │
                               │                 │        └──────────────────────┘
┌─────────────────────┐        │                 │
│ Obstacle detecting  │        │                 │
│      unit           │────────│                 │
│     (940)           │        └────────┬────────┘
└─────────────────────┘                 │
                                        │
                               ┌────────┴────────┐
                               │ Second power    │
                               │ supply (920)    │
                               └─────────────────┘
```

Europäisches
Patentamt

European
Patent Office

Office européen
des brevets

# EUROPEAN SEARCH REPORT

Application Number

**EP 22 21 0146**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/362921 A1 (HANAOKA TOHRU [JP] ET AL) 17 December 2015 (2015-12-17) * paragraphs [0047] – [0110] * ----- | 1-13 | INV. G01S17/42 B25J11/00 B25J9/16 |
| Y | WO 2016/091291 A1 (ELECTROLUX AB [SE]) 16 June 2016 (2016-06-16) * page 22 * ----- | 1-13 | B25J19/02 A47L9/28 G01S17/93 G01S17/89 |
| Y | GB 2 494 413 A (LAND ROVER UK LTD [GB]) 13 March 2013 (2013-03-13) * pages 6,7 * ----- | 1-13 | G01S7/481 G01S17/04 A47L9/00 G01S17/87 G01S17/88 G01S17/931 G05D1/02 |

TECHNICAL FIELDS
SEARCHED     (IPC)

G01S
A47L
B25J

The present search report has been drawn up for all claims

| Place of search | Date of completion of the search | Examiner |
|---|---|---|
| Munich | 22 February 2023 | Damp, Stephan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.............................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 0146

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2023

| Patent document cited in search report | | Publication date | Patent family member(s) | | Publication date |
|---|---|---|---|---|---|
| US 2015362921 | A1 | 17-12-2015 | CN | 105074600 A | 18-11-2015 |
| | | | JP | 6132659 B2 | 24-05-2017 |
| | | | JP | 2014194729 A | 09-10-2014 |
| | | | US | 2015362921 A1 | 17-12-2015 |
| | | | WO | 2014132509 A1 | 04-09-2014 |
| WO 2016091291 | A1 | 16-06-2016 | CN | 106998980 A | 01-08-2017 |
| | | | EP | 3230814 A1 | 18-10-2017 |
| | | | US | 2017344019 A1 | 30-11-2017 |
| | | | WO | 2016091291 A1 | 16-06-2016 |
| GB 2494413 | A | 13-03-2013 | GB | 2494413 A | 13-03-2013 |
| | | | GB | 2494526 A | 13-03-2013 |
| | | | WO | 2013034560 A1 | 14-03-2013 |